# EUROPÄISCHE PATENTSCHRIFT

(11) **EP 0 738 624 B1**
(45) Veröffentlichungstag und Bekanntmachung des Hinweises auf die Patenterteilung: **21.04.1999**
(21) Anmeldenummer: 95115667.8
(22) Anmeldetag: 05.10.1995
(51) Int. Cl.: B60N 2/02, B60N 2/10, B60N 2/20

(54) **Kraftfahrzeugsitz, insbesondere Rücksitz oder Rücksitzbank**
Motor vehicle seat, in particular rear sat or rear bench
Siège de véhicule automobile, en particulier siège arrière ou banquette arrière

(30) Priorität: 19.04.1995 DE 19514380
(43) Veröffentlichungstag der Anmeldung: 23.10.1996
(73) Patentinhaber: KEIPER RECARO GmbH & Co., D-42855 Remscheid (DE)
(72) Erfinder: Jung, Peter, Dipl.-Ing. (FH), D-67657 Kaiserslautern (DE); Deegener, Elmar, Dipl.-Ing. (FH), D-67705 Stelzenberg (DE); Christoffel, Thomas, Dipl.-Ing. (BA), D-66909 Hüffler (DE)
(74) Vertreter: Patentanwälte Bartels und Partner

(56) Entgegenhaltungen:
- EP-A- 0 047 699
- EP-A- 0 364 146
- EP-A- 0 500 412
- EP-A- 0 568 793
- GB-A- 2 251 183
- US-A- 4 700 989
- US-A- 4 830 422
- US-A- 5 368 355
- US-A- 5 393 116

## Beschreibung

Die Erfindung betrifft einen Kraftfahrzeugsitz, insbesondere einen Rücksitz oder eine Rücksitzbank mit den Merkmalen des Oberbegriffs des Anspruchs 1.

Bei bekannten Kraftfahrzeugsitzen kann der Sitz, wenn er aus einer vertikalen Lage seines Sitzteils mit an diesem anliegender Rückenlehne in die Gebrauchslage zurückgeschwenkt und die Rückenlehne wieder in die Ausgangslage zurückgeklappt worden ist, benutzt werden, auch wenn die hinteren Füße noch nicht wieder mit der Bodenstruktur des Fahrzeuges verbunden sind, die Verriegelungsvorrichtung also noch geöffnet ist, ohne daß der Sitzbenutzer dies bemerkt.

Durch die GB-A-2 251 183 ist ein gattungsgemäßer Kraftfahrzeugsitz bekannt, der nicht benutzt werden kann, wenn er nicht ordnungsgemäß mit der Bodenstruktur verbunden ist, so daß mit diesem bekannten Fahrzeugsitz eine Gefährdung der Sitzbenutzer und gegebenenfalls auch anderer Fahrzeuginsassen im wesentlichen ausgeschlossen ist. So ist die bekannte Verriegelungsvorrichtung mit der Sicherheitseinrichtung derart gekoppelt, daß die nach vorne geklappte Rückenlehne erst dann wieder in die Gebrauchslage zurückgeklappt werden kann, wenn die hinteren Füße ordnungsgemäß wieder mit der Bodenstruktur des Fahrzeuges verbunden sind und die Verriegelungsvorrichtung geschlossen ist. Die Sicherheitseinrichtung weist eine konzentrisch zur Schwenkachse der Rückenlehne angeordnete und mit dieser drehfest verbundene Sperrscheibe auf, welche ein mit ihr zusammenwirkendes Sperrelement in allen Schwenklagen der Rückenlehne mit Ausnahme der Schwenklage bei nach vorne geklappter Rückenlehne in einer ersten Sperrlage hält, in welcher die Verriegelungsvorrichtung gegen ein Lösen gesichert ist, und in der nach vorne geklappten Schwenklage der Rückenlehne eine Bewegung des Sperrelementes infolge eines Lösens der Verriegelungsvorrichtung gestattet.

Ausgehend von diesem Stand der Technik liegt der Erfindung die Aufgabe zugrunde, den bekannten Kraftfahrzeugsitz weiter zu verbessern.

Eine dahingehende Aufgabe löst ein Kraftfahrzeugsitz mit den Merkmalen des Anspruchs 1 in seiner Gesamtheit.

Zur Lösung der erfindungsgemäßen Aufgabe ist gemäß dem kennzeichnenden Teil des Anspruchs 1 vorgesehen, daß das Sperrelement sich in eine zweite Sperrlage bewegt, in welcher es die Sperrscheibe gegen eine Drehung im Sinne eines Zurückklappens der Rückenlehne in die Gebrauchslage sichert und die es nur bei einem Schließen der Verriegelungsvorrichtung wieder verläßt.

Bei einer bevorzugten Ausführungsform weist die Sicherheitseinrichtung einen Betätigungshebel auf, der nur in dem einem Lösen der Verriegelungsvorrichtung entsprechenden Schwenksinne mit einem Schwenkhebel zwangsläufig gekoppelt ist, welcher nur dann mittels des Betätigungshebels in die ein Lösen der Verriegelungsvorrichtung gestattende Schwenklage gebracht werden kann, wenn die Rückenlehne nach vorne geklappt ist.

Um zu verhindern, daß die Sicherheitseinrichtung und insbesondere ihr die Rückenlehne in der nach vorne geklappten Stellung verriegelnder Teil hohen Belastungen ausgesetzt werden kann, wenn versucht wird, die Rückenlehne trotz der Verriegelung in die Gebrauchslage zurückzuklappen, ist die jedem der Gelenkbeschläge zugeordnete Arretierungsvorrichtung, mittels deren die Rükkenlehne im Gebrauchslagenbereich arretiert wird, so ausgebildet, daß sie die Rückenlehne auch in der nach vorne geklappten Lage zu arretieren vermag.

Damit die Arretierungsvorrichtung des Gelenkbeschlages nicht gelöst werden kann, wenn die Rückenlehne in der nach vorne geklappten Lage festgestellt ist, ist bei einer bevorzugten Ausführungsform die Sicherungseinrichtung so ausgebildet, daß sie ein Lösen der Arretierungsvorrichtung verhindert, wenn die Verriegelungsvorrichtung gelöst ist.

Bei Kraftfahrzeugsitzen, welche eine Feststellvorrichtung aufweisen, die für eine Längsverstellung und auch für das Schwenken des Sitzteils aus der Gebrauchslage in die vertikale Lage und umgekehrt gelöst werden muß, ist vorteilhafterweise an den Betätigungshebel der Sicherheitseinrichtung mit begrenztem Schwenkbereich ein Auslösehebel für diese Feststellvorrichtung angelenkt. Es kann dann mittels dieses Auslösehebels zunächst der Betätigungshebel in diejenige Stellung gebracht werden, in welcher die Verriegelungsvorrichtung der hinteren Sitzfüße gelöst ist, und dann durch eine Schwenkbewegung des Auslösehebels relativ zum Betätigungshebel die Feststellvorrichtung gelöst werden, um den Sitzteil nunmehr zusammen mit der nach vorne geklappten Rückenlehne in die vertikale Lage schwenken zu können.

Bei einer bevorzugten Ausführungsform weist jede der den beiden hinteren Füßen zugeordneten Verriegelungsvorrichtungen einen schwenkbar gelagerten Haken auf, welcher in verriegeltem Zustand einen Bolzen der Bodenstruktur umgreift und in dieser Verriegelungsstellung von einer federbelasteten Spannklinke gehalten wird, die mittels des Betätigungshebels der Sicherheitseinrichtung entgegen der Kraft einer Feder in eine Freigabestellung schwenkbar ist, in welcher der Haken durch die Kraft einer an ihm angreifenden Rückstellfeder seine den Bolzen freigebende Entriegelungsstellung einnimmt. Vorzugsweise ist dieser Haken so ausgebildet, daß er zwangsläufig in die Verriegelungsstellung geschwenkt wird, wenn der Fuß auf den Bolzen der Bodenstruktur abgesenkt wird, wobei dank der Federbelastung die Spannklinge selbsttätig wieder wirksam wird, sobald der Haken eine Schwenklage erreicht hat, in welcher er den Bolzen zu hintergreifen beginnt.

Vorzugsweise ist der erfindungsgemäße Kraftfahrzeugsitz so ausgebildet, daß er nicht nur mit in Anlage an den Sitzteil geklappter Rückenlehne, also im gefalteten Zustand, in eine vertikale Lage geschwenkt werden kann, sondern auch in Sitzlängsrichtung einstellbar ist. Diese Längseinstellbarkeit läßt sich mit hinteren Schwingen realisieren, die einerseits mit den hinteren Füßen und andererseits mit der tragenden Struktur des Sitzteils schwenkbar verbunden sind. Vorne können ebenfalls Schwingen vorgesehen sein. Man kann aber statt der vorderen Schwingen Stützen vorsehen und deren oberes Ende über eine Schlitz-Zapfen-Führung mit der tragenden Struktur des Sitzteils verbinden. Bevorzugte Ausführungsformen der Ausbildung des Sitzgestelles und der Füße sind Gegenstand der Ansprüche 12 bis 22.

Die Ausgestaltungen des erfindungsgemäßen Kraftfahrzeugsitzes führen zu einem minimalen Raumbedarf des Sitzes in dem nach vorne geklappten und in die vertikale Lage geschwenkten Zustand. Zu diesem minimalen Raumbedarf trägt auch bei, daß dank der erfindungsgemäßen Kinematik die hinteren Schwingen in Anlage an die Unterseite der tragenden Struktur des Sitzteils geschwenkt werden, wenn der Sitzteil nach vorne in die vertikale Stellung geklappt wird. Außerdem kann mittels der Feststellvorrichtung der Sitz auch in der nach vorne geklappten Stellung festgestellt werden, so daß er nicht durch auf ihn einwirkende Kräfte ungewollt aus dieser Position herausbewegt werden kann. Hierdurch wird auch der Ausbau des Sitzes und der Einbau erleichtert, die der erfindungsgemäßen Ausbildung der Füße und deren Verriegelungsvorrichtung rasch und ohne Werkzeug ausgeführt werden können.

Im folgenden ist die Erfindung an Hand von in der Zeichnung dargestellten Ausführungsbeispiel im einzelnen erläutert. Es zeigen
- Fig. 1: eine Seitenansicht eines ersten Ausführungsbeispiels in der hintersten Stellung des Längseinstellbereiches,
- Fig. 2: eine Seitenansicht des ersten Ausführungsbeispiels in der vordersten Stellung des Längseinstellbereiches,
- Fig. 3: eine Seitenansicht des ersten Ausführungsbeispiels bei nach vorne geklappter Rückenlehne,
- Fig. 4: eine Seitenansicht des ersten Ausführungsbeispiels in zusammengefaltetem und zusammengeklapptem Zustand,
- Fi.g 5: einen vergrößert dargestellten Ausschnitt aus Fig. 1 mit dem vorderen Sitzfuß,
- Fig. 6: einen vergrößert dargestellten Ausschnitt aus Fig. 1 mit dem Gelenkbeschlag sowie der ihm zugeordneten Verriegelungsvorrichtung und Sicherheitseinrichtung,
- Fig. 7: eine perspektivisch dargestellte Ansicht der tragenden Struktur des ersten Ausführungsbeispiels mit dem zugehörigen Sicherheitsgurten,
- Fig. 8: eine perspektivisch dargestellte Ansicht der beiden Gelenkbeschläge eines zweiten Ausführungsbeispiels,
- Fig. 9: eine perspektivisch dargestellte Ansicht des einen Gelenkbeschlags des zweiten Ausführungsbeispiels,
- Fig. 10: eine schematisch dargestellte Seitenansicht des einen Gelenkbeschlages des zweiten Ausführungsbeispiels in einer der Gebrauchslage der Rückenlehne entsprechenden Einstellung,
- Fig. 11: eine Seitenansicht entsprechend Fig. 10 in einer Einstellung bei nach vorne geklappter Rückenlehne und geschlossener Verriegelungsvorrichtung der hinteren Füße,
- Fig. 12: eine Seitenansicht entsprechend Fig. 11, jedoch in einer Einstellung bei nach vorne geklappter Rückenlehne und gelöster Verriegelungsvorrichtung der hinteren Füße,
- Fig. 13: eine Seitenansicht entsprechend Fig. 12, jedoch bei entsperrter Feststellvorrichtung des Sitzgestells,
- Fig. 14: eine schematisch dargestellte Seitenansicht eines hinteren Fußes im mit der Bodenstruktur spielfrei verbundenem Zustand,
- Fig. 15: eine Seitenansicht entsprechend Fig. 14 bei freigegebenem Haken,
- Fig. 16: eine Seitenansicht ensprechend Fig. 15, jedoch bei einer Schwenklage des Haken, in welcher dieser den Bolzen der Bodenstruktur vollständig freigibt,
- Fig. 17: eine schematisch dargestellte Seitenansicht des Sitzgestells des zweiten Ausführungsbeispiels bei einer Einstellung des Sitzes am hinteren Ende des Längseinstellbereiches,
- Fig. 18: eine Seitenansicht entsprechend Fig. 17 ohne Gelenkbeschlag, jedoch bei einer Einstellung des Sitzes am vorderen Ende des Längseinstellbereiches,
- Fig. 19: eine Seitenansicht entsprechend Fig. 18 bei einer Einstellung des Sitzes am hinteren Ende des Längseinstellbereiches,
- Fig. 20: eine Seitenansicht des Sitzgestells des zweiten Ausführungsbeispiels ohne Darstellung des Gelenkbeschlages in einer vertikalen Lage der Rückenlehne und des Sitzteils,
- Fig. 21: eine schematisch dargestellte Seitenansicht des Sitzgestells eines dritten Ausführungsbeispiels.

Eine Rücksitzbank für Kraftfahrzeuge weist zwei vordere Sitzfüße 1 und vier hintere Sitzfüße 2 auf, die jeweils gleich ausgebildet sind, weshalb nur diejenigen der linken Sitzseite dargestellt und im folgenden beschrieben sind.

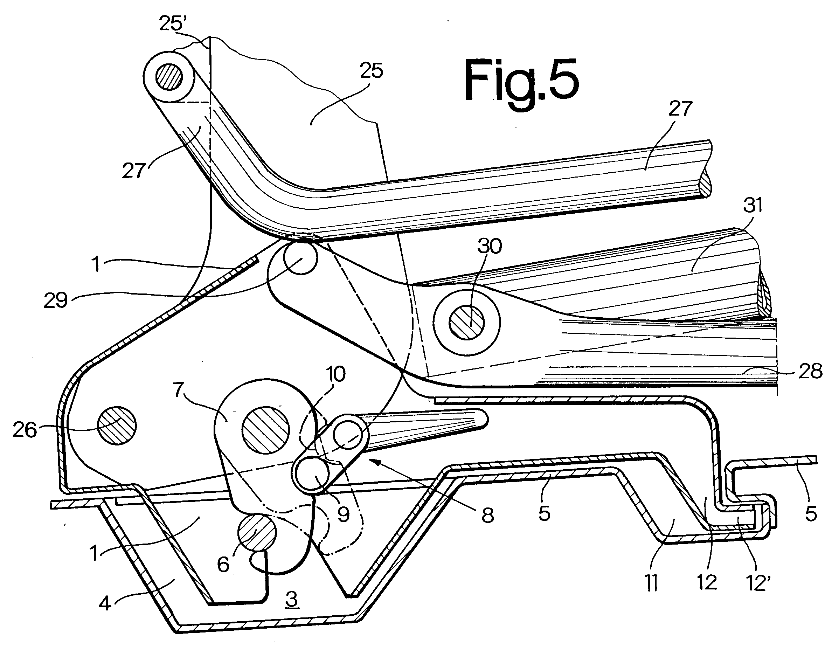

Wie insbesondere Fig.5 zeigt, greift der vordere Sitzfuß 1 mit einer ein nach unten offenes Maul 3 bildenden Materialpartie in eine erste Vertiefung 4 der Bodenstruktur 5 des Fahrzeuges ein, in der in Sitzquerrichtung verlaufend und starr mit der Bodenstruktur 5 verbunden ein Verbindungsbolzen 6 angeordnet ist. Wie Fig.5 zeigt, ist am oberen Ende der vorderen Flanke des Maules 3 eine an den Durchmesser des Verbindungsbolzens 6 angepaßte, nur nach hinten offene Nut vorgesehen, in welcher der Verbindungsbolzen 6 liegt, wenn die Verbindung zwischen dem vorderen Sitzfuß 1 und der Bodenstruktur 5 hergestellt ist. Ein oberhalb dieser Nut am vorderen Sitzfuß 1 angelenkter Haken 7 hintergreift in seiner Sperrstellung den Verbindungsbolzen 6 von der offenen Seite der Nut her. In dieser Sperrstellung wird der Haken 7 formschlüssig von einem ebenfalls schwenkbar am vorderen Sitzfuß 1 gelagerten, doppelarmigen Verriegelungshebel 8 gehalten, der am freien Endabschnitt seines kürzeren Hebelarmes einen parallel zu seiner Schwenkachse liegenden Zapfen 9 aufweist, der in der Verriegelungsstellung des Verriegelungshebels 8 in eine in der Hakenrückseite vorgesehene, nach hinten offene Nut 10 eingreift. Die Lage der Schwenkachse des Verriegelungshebels 8 ist bezüglich der Lage der Nut 10 und der Lage der Schwenkachse des Hakens 7 so gewählt, daß eine Belastung des Hakens 7 im Sinne eines Schwenkens in seine Freigabestellung auf den Verriegelungshebel 8 kein Drehmoment ausübt. Nur wenn der längere Hebelarm des Verriegelungshebels 8 manuell nach oben, bei einer Blickrichtung gemäß Fig.5 also entgegen dem Uhrzeigersinn, geschwenkt wird, bewegt eine vorgespannte, nicht dargestellte Feder den Haken 7 in seine Freigabestellung.

In eine im Abstand hinter der ersten Vertiefung 4 vorgesehene zweite Vertiefung 11 der Bodenstruktur 5 des Fahrzeuges greift bei hergestellter Verbindung das freie Ende 12' eines nach unten doppelt abgekröpften Endabschnittes 12 des vorderen Sitzfußes 1 ein, und zwar in eine in der hinteren Flanke der zweiten Vertiefung 11 vorgesehene, nach vorne offene Nut. Bei hergestellter Verbindung mit der Bodenstruktur 5 kann deshalb der vordere Sitzfuß 1 keine Schwenkbewegung um den Verbindungsbolzen 6 ausführen.

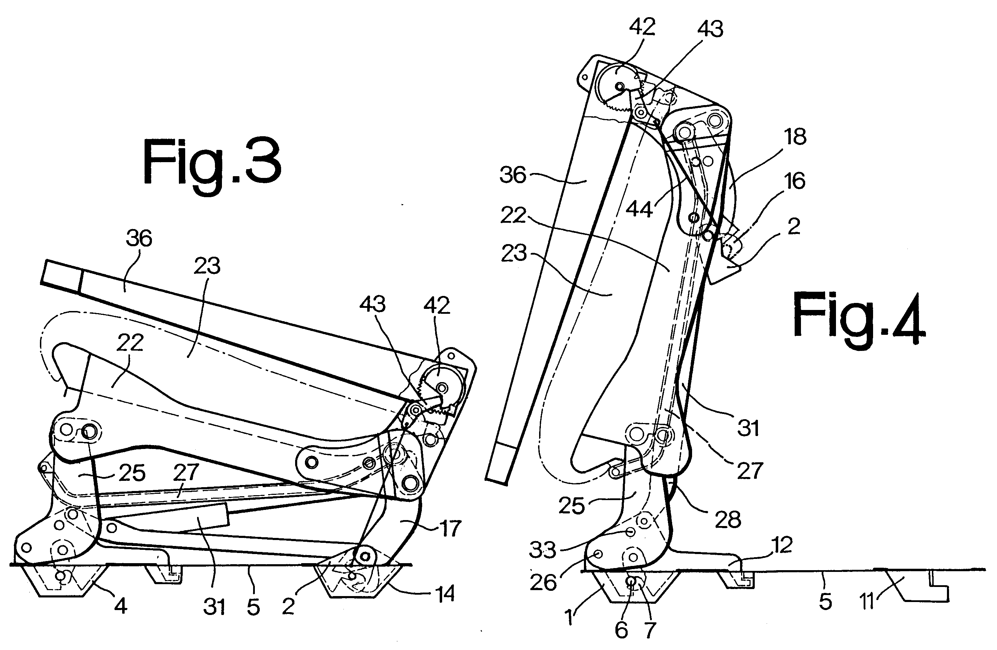

Wenn der vordere Sitzfuß 1 von der Bodenstruktur 5 getrennt werden soll, was nur aus der in Fig. 4 dargestellten, also gefalteten und nach vorne geklappten Lage heraus möglich ist, weil nur dann eine Entriegelung des vorderen Sitzfußes 1 möglich ist, muß nach der Freigabe des Verbindungsbolzens 6 durch den Haken 7 der vordere Sitzfuß 1 zunächst etwas nach vorne bewegt und dann die das Maul 3 bildende Materialpartie aus der ersten Vertiefung 4 ausgehoben werden. Bei der Bewegung nach vorne und der anschließenden Bewegung nach oben der das Maul 3 bildenden Materialpartie kommt das freie Ende 12' außer Eingriff mit der Nut der zweiten Vertiefung 11 und kann nun ebenfalls aus dieser ausgehoben werden. Entsprechend wird beim Herstellen der Verbindung zunächst der Endabschnitt 12 in die zweite Vertiefung 11 eingeführt und dann das Maul 3 auf den Verbindungsbolzen 6 abgesenkt.

Auch jeder hintere Sitzfuß 2 weist eine ein nach unten offenes Maul 13 bildende Materialpartie auf, welche bei hergestellter Verbindung mit der Bodenstruktur 5 in je eine dritte Vertiefung 14 der Bodenstruktur 5 eingreift, in der parallel zum Verbindungsbolzen 6 und starr mit der Bodenstruktur 5 verbunden ein Verbindungsbolzen 15 angeordnet ist. Bei hergestellter Verbindung nimmt das Maul 13 den Verbindungsbolzen 15 auf. In dem bei hergestellter Verbindung außerhalb der dritten Vertiefung 14 liegenden Teil des hinteren Fußes 2 ist ein Haken 16 mittels eines parallel zum Verbindungsbolzen 15 liegenden Gelenkzapfens 17 am hinteren Sitzfuß derart angelenkt, daß er von hinten und unten her den Verbindungsbolzen 15 spielfrei hintergreifen kann. Der Haken 16 muß deshalb nach hinten, bei einer Blickrichtung gemäß den Figuren also entgegen dem Uhrzeigersinn, geschwenkt werden, um den Verbindungsbolzen 15 freizugeben.

Der Schwenkzapfen 17 verbindet das untere Ende einer hinteren Schwinge 18 schwenkbar mit dem hinteren Sitzfuß 2. Eine gleich ausgebildete hintere Schwinge ist mit dem anderen, nicht dargestellten hinteren Sitzfuß in gleicher Weise schwenkbar verbunden. Die leicht nach hinten ausgebogene hintere Schwinge 18 ist im Bereich ihres oberen Endes mittels eines zum Schwenkzapfen 17 parallelen Verbindungszapfens 19 schwenkbar mit einer laschenförmigen Ausgleichsschwinge 20 verbunden, die andererseits mittels eines zum Verbindungszapfen 19 parallelen, aber tiefer als dieser liegenden Gelenkzapfens 21 schwenkbar mit dem hinteren Endabschnitt des einen Seitenteils einer tragenden Struktur 22 des Sitzteils verbunden ist. Die tragende Struktur 22 trägt ein Sitzteilpolster 23.

Der vordere Endabschnitt des von der Ausgleichsschwinge 20 getragenen Seitenteils der tragenden Struktur 22 ist mittels eines zum Gelenkzapfen 21 parallel verlaufenden Gelenkzapfens 24 schwenkbar mit dem oberen Endabschnitt einer vorderen Schwinge 25 verbunden, deren unterer, nach vorne abgewinkelter Teil im Bereich seines freien Endabschnittes mittels eines zu den übrigen Gelenkzapfen parallelen Gelenkzapfens 26 schwenkbar mit dem vorderen Sitzfuß 1 verbunden ist.

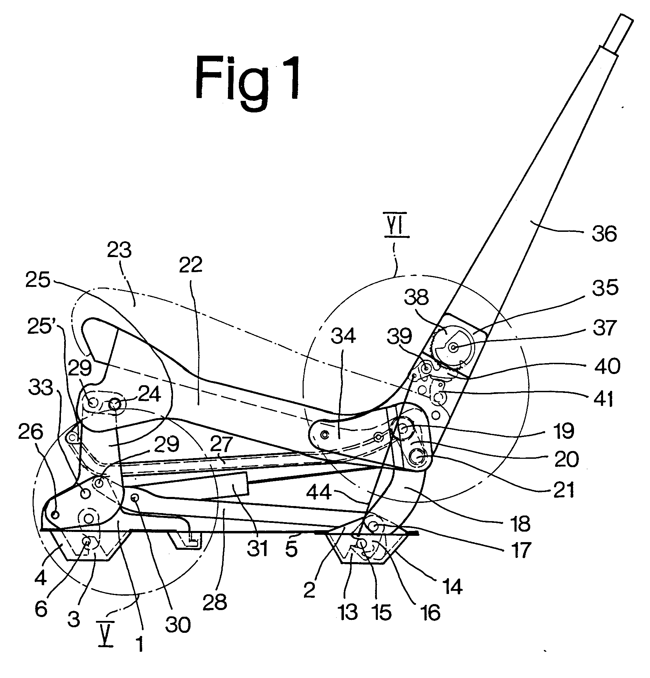

Eine durch einen starren Stab gebildete Koppel 27 ist einerseits mittels des Verbindungszapfens 19 schwenkbar mit der hinteren Schwinge 18 und der Ausgleichsschwinge 20 und andererseits mit der vorderen Schwinge 25 im Bereich eines über sie nach vorne hinausragenden Fortsatzes 25' schwenkbar verbunden. Ferner ist eine Zugkoppel 28, die ebenfalls durch einen starren Stab gebildet ist, im Bereich ihres hinteren Endes mittels des Gelenkzapfens 17 schwenkbar mit der hinteren Schwinge 18 und dem hinteren Sitzfuß 2 und im Bereich ihres vorderen Endes um eine zu den Gelenkzapfen parallele Achse 29 mit dem vorderen Sitzfuß 1 schwenkbar verbunden. Diese Achse 29 liegt, wie beispielsweise Fig.1 zeigt, in einer Höhe über der Bodenstruktur 5, die größer ist als die Tiefe der ersten Vertiefung 4, und geringfügig unterhalb derjenigen Stelle der Koppel 27, von der aus diese flach nach hinten und steiler nach vorne ansteigt, wenn sich der Sitz an dem in Fig.1 dargestellten hinteren Ende seines Längsverstellbereiches befindet.

Im Abstand von der Achse 29, aber noch im Bereich des vorderen Sitzfußes 1, ist an die Zugkoppel 28 mit zur Achse 29 paralleler Achse 30 das eine Ende einer Gasdruckfeder 31 angelenkt, die andererseits unterhalb des Verbindungszapfens 19 an der hinteren Schwinge 18 angelenkt ist. Diese Anlenkstelle ist mit 32 gekennzeichnet. Die Gasdruckfeder 31 ist im Sinne einer Verlängerung ihrer wirksamen Länge vorgespannt und stufenlos innerhalb ihres Längenverstellbereiches verstellbar und feststellbar. Wenn sie freigegeben wird, wozu ein nicht dargestelltes, manuell betätigbares Betätigungsglied, beispielsweise ein Bowdenzug, vorgesehen sein kann, schiebt die Gasdruckfeder 31 deshalb den Sitz an das hintere Ende seines Längsverstellbereiches. Sofern diese Verschiebung des Sitzes nicht gewünscht wird, kann statt der Gasdruckfeder 31 auch ein anderes Zylinder-Kolben-Aggregat, beispielsweise ein Hydrolock-Element verwendet werden.

Auf der in den Figuren nicht dargestellten Sitzseite können eine Koppel und eine Zugkoppel, welche wie die Koppel 27 und die Zugkoppel 28 ausgebildet und angeordnet sind, vorgesehen sein. Dies gilt auch für die Gasdruckfeder 31 und ein entsprechendes Feststellelement.

Für eine Längsverstellung des Sitzes, bei welcher sich dank der Ausgleichsschwinge 20 die Sitzhöhe praktisch nicht ändert, muß die Gasdruckfeder 31 freigegeben werden. Sofern, wie im Ausführungsbeispiel, die vordere Schwinge 25 in ihrer in Fig.1 dargestellten hintersten Schwenklage mittels eines nur schematisch dargestellten Sperrbolzens 33 mit dem vorderen Sitzfuß 1 formschlüssig verriegelbar ist, muß für eine Längsverstellung auch dieser Sperrbolzen 33 in seine Freigabestellung gebracht werden. Da die Gasdruckfeder 31 zusammen mit der Zugkoppel 28 und der hinteren Schwinge 18 ein Dreieck bilden, kann der Sitz in jeder Stellung seines Längsverschiebebereiches im blockierten Zustand der Gasdruckfeder 31 mittels dieser festgestellt werden. Im Bereich des hinteren Endabschnittes der beiden Seitenteile der tragenden Struktur 22 des Sitzteils ist der untere Beschlagteil 34 je eines Gelenkbeschlages festgelegt, dessen oberer Beschlagteil 35 seitlich mit der tragenden Struktur einer Rückenlehne 36 fest verbunden ist. Da die beiden Gelenkbeschläge gleich ausgebildet sind, ist im folgenden nur der in den Figuren sichtbare Gelenkbeschlag erläutert.

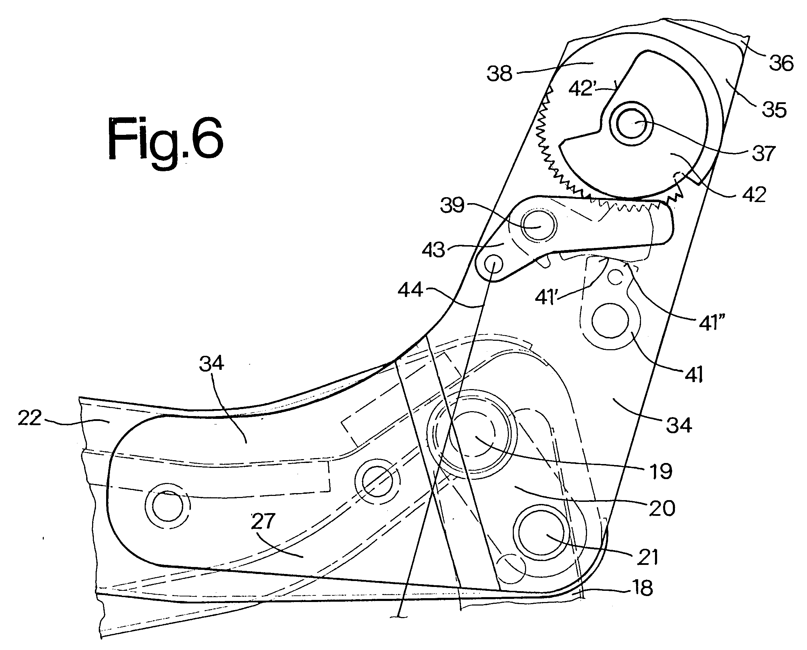

Ein Gelenkbolzen 37, der parallel zu den Gelenkzapfen der Schwingen verläuft, verbindet den oberen Beschlagteil 35 schwenkbar mit dem unteren Beschlagteil 34. Zum Zwecke der Feststellung der Rückenlehne 36 in unterschiedlichen Neigungslagen ist konzentrisch zum Gelenkbolzen 37 eine drehtfest mit dem oberen Beschlagteil 35 verbundene Zahnscheibe 38 vorgesehen, der eine auf einem zum Gelenkbolzen 37 parallelen Bolzen 39 schwenkbar gelagerte Klinke 40 zugeordnet ist, die in ihrer Sperrstellung mit mehreren Zähnen in Eingriff mit den Zähnen der Zahnscheibe 38 steht. In diese Sperrstellung wird die Klinke 40 mittels eines Spannhebels 41 geschwenkt, der schwenkbar am unteren Beschlagteil 34 gelagert ist und mit seinem freien, eine Spannkurve bildenden Ende an der den Zähnen der Klinke 40 abgekehrten Rückseite anliegt. Je weiter der Spannhebel 41 im Sinne des Spannens, bei einer Blickrichtung gemäß Fig.6 im Uhrzeigersinn, gedreht wird, desto stärker ist die Klinke 40 in ihrer Sperrstellung belastet. Eine nicht dargestellte, vorgespannte Feder übt auf den Spannhebel 41 ein Drehmoment im Sinne einer Schwenkbewegung in die Sperrstellung aus. Dieses Drehmoment ist so groß gewählt, daß bei einer normalen Belastung der Rückenlehne 36 die Zähne der Klinke 40 nicht aus den Zähnen der Zahnscheibe 38 herausgedrückt werden, obwohl weder die Flanken der Zähne noch die Spannkurve des Spannhebels 41 im Selbsthemmungsbereich liegen. Um auch bei außergewöhnlich großen Belastungen der Rückenlehne, wie sie bei einem Unfall auftreten können, zu verhindern, daß die Klinke 40 außer Eingriff mit der Zahnscheibe 38 kommt, schließt sich an die außerhalb der Selbsthemmung liegende Spannkurve 41' der Spannscheibe 41 ein Abschnitt 41'' an, der zu einer Selbsthemmung führt.

In axialer Richtung neben der Zahnscheibe 38, aber drehfest mit dieser verbunden, ist auf dem Gelenkbolzen 37 eine Kurvenscheibe 42 angeordnet, auf die ein neben der Klinke 40 auf dem Bolzen 39 schwenkbar gelagerter Steuerhebel 43 ausgerichtet ist, der von der Klinke 40 unabhängig schwenkbar ist. Dieser Steuerhebel 43 ist, wie Fig.6 zeigt, als doppelarmiger Hebel ausgebildet, dessen einer Arm an der die Steuerkurve bildenden Mantelfläche der Steuerscheibe 42 anliegt. Der andere Arm ist über einen Seilzug 44 mit dem Haken 16 des hinteren Sitzfußes 2 derart verbunden, daß letzterer nicht aus seiner Verriegelungsstellung herausgeschwenkt werden kann, wenn der Steuerhebel 43, wie in Fig.6 dargestellt, auf dem hohen, zylindrischen Teil der Steuerkurve aufliegt, weil dann der Seilzug 44 gespannt ist. Dies ist immer dann der Fall, wenn die Rückenlehne 36 sich in einer der wählbaren Neigungslagen befindet. Nur wenn die Rückenlehne 36 nach vorne auf das Sitzteilpolster 23 geklappt ist, ist der Steuerhebel 43 in Anlage an dem niedrigen Abschnitt 42' der Steuerkurve. Dann hat sich die Verbindungsstelle zwischen dem Seilzug 44 und dem kürzeren Arm des Steuerhebels 43 dem Haken 16 so weit genähert, daß dieser in seine Freigabestellung geschwenkt werden kann, in der dann der Seilzug 44 wieder gespannt ist. Hierdurch ist sichergestellt, daß die Verbindung zwischen dem hinteren Sitzfuß 2 und der Bodenstruktur 5 nicht gelöst werden kann, wenn die Rückenlehne 36 ihre Gebrauchslage einnimmt und der Sitz deshalb benutzt werden könnte.

Solange sich der Haken 16 in der Freigabestellung befindet, verhindert der Steuerhebel 43 infolge seiner Anlage an der Stufe, welche vom niedrigen Abschnitt 42' der Steuerkurve zum hohen Abschnitt führt, ein Zurückklappen der Rückenlehne 36 in die Gebrauchsstellung. Die ist erst wieder möglich, wenn zuvor der Haken 16 in seine Sperrstellung geschwenkt worden ist. Auch hierdurch wird verhindert, daß der Sitz benutzt werden kann, wenn er nicht ordnungsgemäß mit der Bodenstruktur 5 verbunden ist.

Da der Haken 16 nur dann in seine Freigabestellung geschwenkt werden kann, wenn die Rückenlehne 36 nach vorne geklappt ist, ist nur bei nach vorne geklappter Rückenlehne 36, also im zusammengefalteten Zustand des Sitzes, ein Schwenken desselben in die in Fig.4 dargestellte Position möglich, in welcher der Sitzteil und die am Sitzteilpolster 23 anliegende Rückenlehne 36 sich praktisch in einer vertikalen Stellung befinden. Dank der Zugkoppel 28 werden, wenn der zusammengefaltete Sitz nach vorne in eine vertikale Lage geschwenkt wird, die hinteren Schwingen 18 an die Unterseite der tragenden Struktur 22 des Sitzteils herangeschwenkt, wie dies Fig.4 zeigt. Der Raumbedarf des zusammengefalteten Sitzes ist dann relativ gering.

Die Gasdruckfeder 31 hält den Sitz in dieser nach vorne geklappten Stellung. Der Sperrbolzen 33 verriegelt die vordere Schwinge 25 mit dem vorderen Sitzfuß 1. Da außerdem der vordere Sitzfuß 1 unbeweglich mit der Bodenstruktur 5 verbunden ist, ist auch die Lage des Sitzes in dieser nach vorne geklappten Stellung stabil.

Das Ausbauen des Sitzes und auch das Einbauen ist nur in dem in Fig.4 dargestellten Zustand möglich, in dem der zusammengefaltete Sitz nach vorne geklappt ist, weil nur in diesem Zustand der Verriegelungshebel 8 zugänglich ist und betätigt werden kann. Dies ist aber kein Nachteil, weil in diesem Zustand der Sitz leichter zu handhaben ist, als wenn nur die Rückenlehne nach vorne geklappt ist oder sich in der Gebrauchslage befindet.

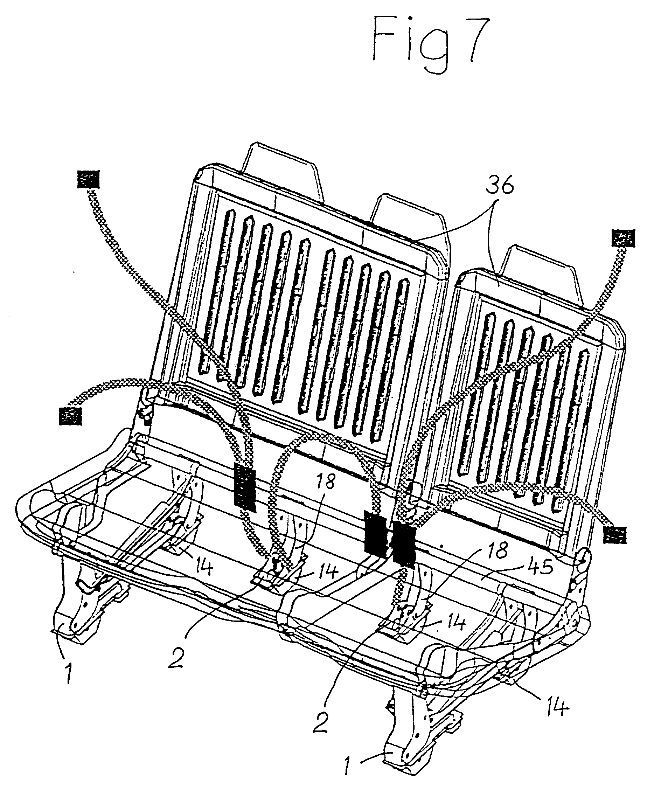

Wie Fig. 7 zeigt, sind die beiden hinteren Sitzfüße 2, die nicht im Abstand hinter einem der beiden vorderen Sitzfüße 1 vorgesehen sind, zu beiden Seiten des mittleren Sitzplatzes angeordnet. Sie dienen der Verankerung der Sicherheitsgurte und sind wie der vorstehend im einzelnen beschriebene, ganz außen angeordnete hintere Sitzfuß 2 ausgebildet sowie am unteren Ende je einer hinteren Schwinge 18 vorgesehen. Über ein zu den Verbindungszapfen 19 gleichachsig angeordnetes Rohr 45 werden die innen angeordneten hinteren Sitzfüße 2 ebenfalls an die Unterseite der tragenden Struktur 22 herangeschwenkt, wenn die Rücksitzbank nach vorne geklappt wird. Dieses Rohr 45 und ein die vorderen Sitzfüße 1 miteinander verbindendes, zur Achse 29 konzentrisches Rohr erhöhen die Quersteifigkeit.

Für die beiden innen angeordneten hinteren Sitzfüße 2 ist ebenfalls je eine dritte Vertiefung 14 vorgesehen, die wie die beiden anderen dritten Vertiefungen 14 ausgebildet ist. Die Sicherheitsgurte sind an die beiden Schwenkzapfen 17 angehängt, welche die Haken 16 der innen angeordneten hinteren Sitzfüße 2 tragen. Die Gurtkräfte werden also über die Haken 16 und die von ihnen hintergriffenen Verbindungsbolzen 15 in die Fahrzeugstruktur eingeleitet. Wenn die Sicherheitsgurte nicht angelegt sind, werden die beiden äußeren 3-Punkt-Gurte von ihren Gurtaufrollern so weit aufgerollt, bis sie gestrafft sind. Sie treten dann nicht störend in Erscheinung und behindern auch nicht das Vorschwenken der Rückenlehne und das Vorklappen des Sitzes. Letzteres gilt auch für den mittleren Beckengurt, der, wenn er nicht angelegt ist, auf dem Sitzpolster aufliegt und bei vorgeschwenkter Rückenlehne zwischen dieser und dem Sitzteilpolster liegt.

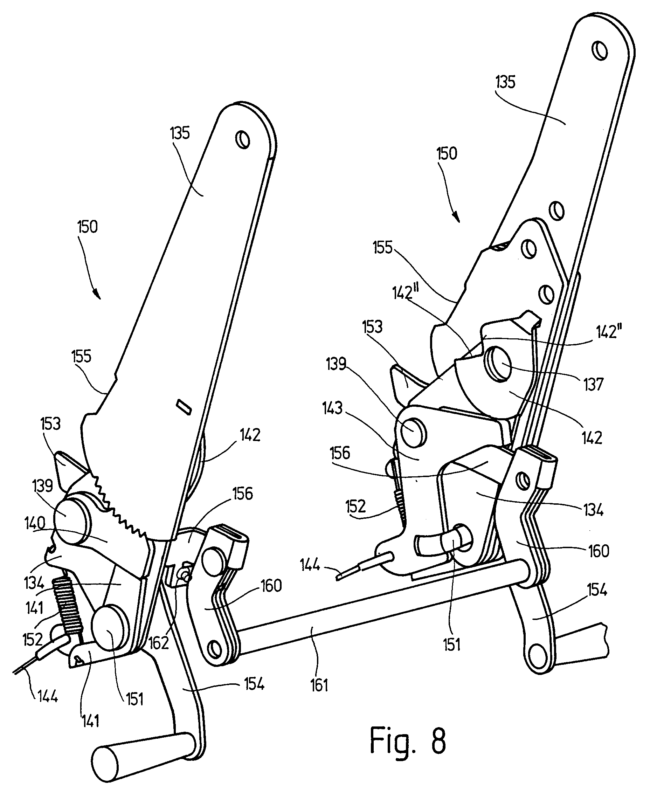

Die beiden in Fig. 8 dargestellten, spiegelbildlich gleich ausgebildeten Gelenkbeschläge 150 verbinden die Rückenlehne eines zweiten Ausführungsbeispiels eines Rücksitzes oder einer Rücksitzbank mit der tragenden Struktur des Sitzteils. Mittels eines Gelenkbolzen 137 ist der mit der Rückenlehne verbundene obere Beschlagteil 135 schwenkbar mit dem unteren Beschlagteil 134 verbunden. Um die Rückenlehne in unterschiedlichen Neigungseinstellungen arretieren zu können, ist am unteren Rand des oberen Beschlagteils 135 ein zum Gelenkbolzen 137 konzentrischer Zahnkranz vorhanden, in dessen Zähne die Zähne einer Sperrklinge 140 eingreifen können, welche wie der obere Beschlagteil 135 neben dem unteren Beschlagteil 134 liegend an letzteren mittels eines zum Gelenkbolzen 137 parallelen Nietbolzens 139 schwenkbar gelagert ist. Eine als doppelarmiger Hebel ausgebildete Spannklinke 141 ist auf einem zum Gelenkbolzen 137 parallelen Verbindungszapfen 151 fest angeordnet, der drehbar im unteren Beschlagteil 134 gelagert ist. Der sich vom Verbindungszapfen 151 gegen den oberen Beschlagteil 135 erstreckende Arm der Spannklinke 141 liegt mit seinem freien Ende an der Sperrklinke 140 an und weist hier eine Spannkurve 141' auf, deren Steigung so gewählt ist, daß keine Selbsthemmung vorhanden ist, aber bei normaler Belastung der Rückenlehne das von der Sperrklinke 140 auf die Spannklinke 141 ausgeübte Drehmoment kleiner ist als das entgegengesetzte Drehmoment, das eine vorgespannte Feder 152 erzeugt, die einerseits am anderen Arm der Spannklinge 141 und andererseits am unteren Beschlagteil 134 angreift, wie Fig. 8 zeigt. Man kann jedoch im Anschluß an die Spannkurve 141' einen selbsthemmenden Abschnitt 141'' vorsehen, der in Anlage an die Sperrklinke 140 kommt, wenn die Spannklinke 141 geringfügig entgegen der Spannrichtung, also bei einer Blickrichtung gemäß Fig. 8 entgegen dem Uhrzeigersinn, gedreht wird.

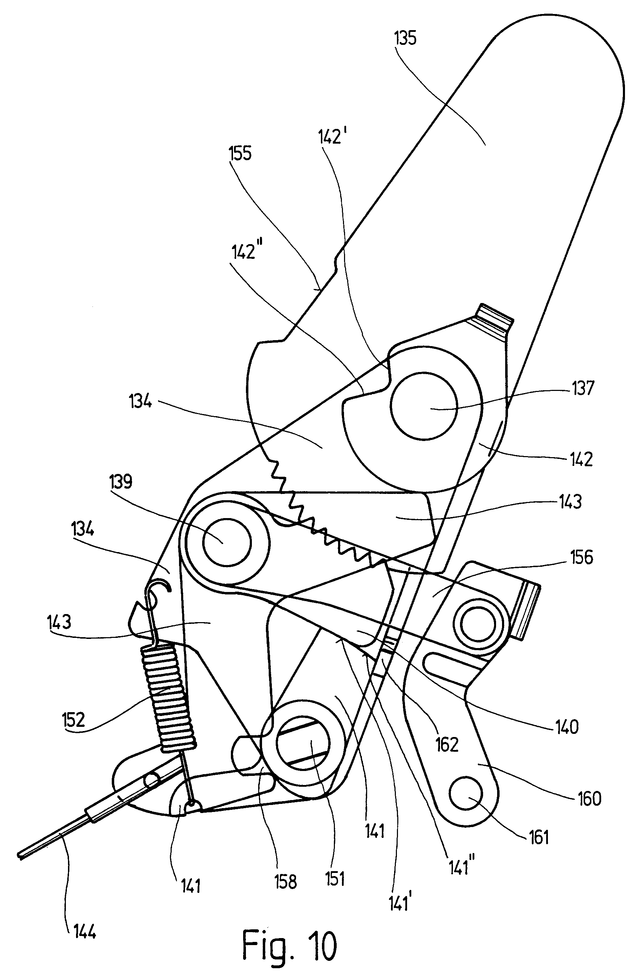

Um nicht nur von der Sitzvorderseite her, sondern auch von der Sitzhinterseite her bequem die Spannklinke 141 entgegen dem Uhrzeigersinn bei einer Blickrichtung gemäß Fig. 10 in diejenige Stellung schwenken zu können, in welcher die Sperrklinke 140 außer Eingriff mit der Verzahnung des oberen Beschlagteils 135 ist, sind auf dem Verbindungszapfen 151 fest ein nach oben und vorne verlaufender erster Auslösehebel 153 und ein sich nach unten erstreckender zweiter Auslösehebel 154 angeordnete, an dessen freiem Endabschnitt im Ausführungsbeispiel ein parallel zum Verbindungszapfen 151 liegender Handgriff vorgesehen ist. Dieser Handgriff ist gut von dem Raum hinter dem Sitz aus erreichbar.

Jedem der beiden Gelenkbeschläge 150 ist eine Sicherheitseinrichtung zugeordnet, die beide gleich ausgebildet sind, weshalb im folgenden nur die eine näher erläutert ist.

Die Sicherheitseinrichtung weist eine auf dem Gelenkbolzen 137 angeordnete Kurvenscheibe 142 auf, die mittels einer abgewinkelten Nase, die in eine Öffnung des oberen Beschlagteils 135 eingreift, mit letzterem drehfest verbunden ist. Die Kurvenscheibe 142 weist einen konzentrisch zum Gelenkbolzen 137 verlaufenden hohen Kurvenabschnitt und einen niedrigen Kurvenabschnitt 142' auf, die über eine Stufe 142'' miteinander verbunden sind. Ferner weist die Sicherheitseinrichtung einen doppelarmigen, im Ausführungsbeispiel rechtwinkligen Schwenkhebel 143 auf, der in der Ebene der Kurvenscheibe 142 liegend auf dem Nietbolzen 139 drehbar gelagert ist. Der eine Arm des Schwenkhebels 143 liegt, wenn sich die Rückenlehne in einer Gebrauchsstellung befindet, am hohen Abschnitt der Kurvenschweibe 142 an, wie dies Fig. 10 zeigt. Der andere Arm des Schwenkhebels 143 erstreckt sich in dieser Schwenklage des Schwenkhebels 143 vom Nietbolzen 139 aus nach unten und ist an seinem unteren Ende mit einem Bowdenzug 144 verbunden.

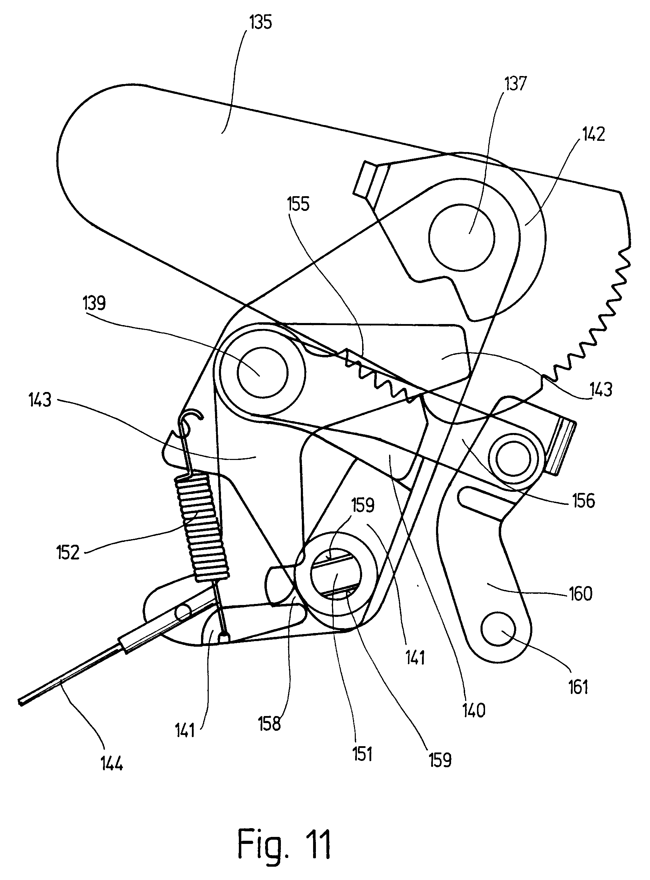

Wird einer der beiden Auslösehebel 153 oder 154 im Sinne einer Freigabe der Sperrklinke 140 betätigt und die Rückenlehne dann nach vorne geklappt, kommt der obere Beschlagteil 135 in die in Fig. 11 dargestellte Schwenklage, in welcher die Zähne der Sperrklinke 140 in eine Nut 155 des oberen Beschlagteils 135 einfallen und damit den oberen Beschlagteil 135 in dieser Schwenkstellung formschlüssig verriegeln, sobald die im Sinne des Spannens, bei einer Blickrichtung gemäß Fig. 11 im Uhrzeigersinn, federbelastete Spannklinke 140 durch eine Freigabe des Auslösehebels freigegeben wird.

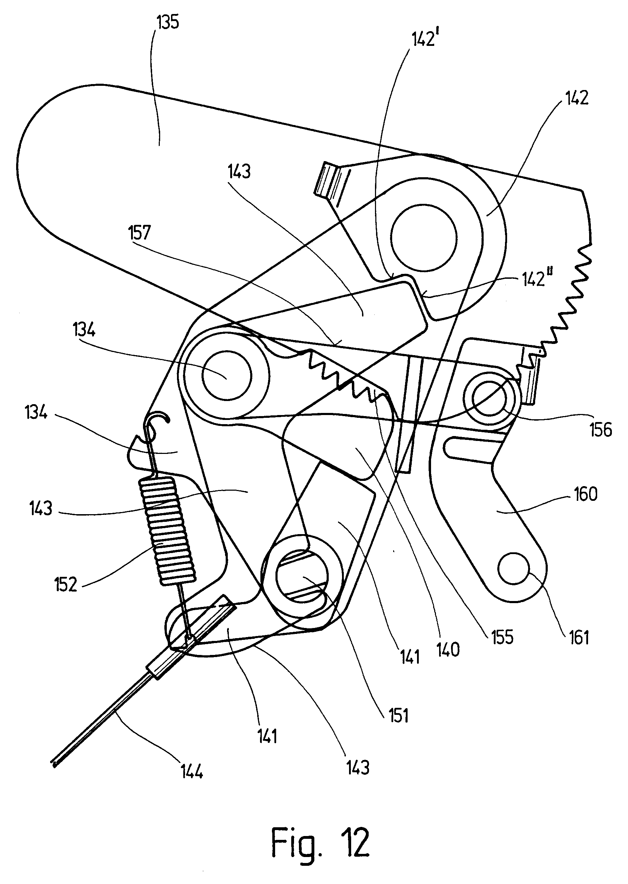

Sofern in dieser nach vorne geklappten Lage der Rückenlehne die Verbindung der hinteren Füße des Sitzes mit der Bodenstruktur des Fahrzeuges gelöst werden soll, muß der Schwenkhebel 143 entgegen dem Uhrzeigersinn bei einer Blickrichtung gemäß Fig. 11 geschwenkt werden, damit über den Bowdenzug 144 die Verriegelungsvorrichtung der hinteren Füße gelöst wird. Um diese Schwenkbewegung des Schwenkhebels 143 bewirken zu können, weist die Sicherheitseinrichtung einen auf dem Nietbolzen 139 schwenkbar gelagerten Betätigungshebel 156 auf, in dessen Schwenkbahn eine Materialpartie des mit der Kurvenscheibe 142 zusammenwirkenden Armes des Schwenkhebels 143 ragt und eine Anschlagfläche 157 für die Oberseite des Betätigungshebels 156 bildet. Der Schwenkhebel 143 wird deshalb zwangsläufig entgegen dem Uhrzeigersinn bei einer Blickrichtung gemäß Fig. 11 geschwenkt, wenn der Betätigungshebel 156 im selben Sinne geschwenkt wird. Wie Fig. 12 zeigt, kommt dabei der Schwenkhebel 143 in Anlage an den niedrigen Kurvenabschnitt 142' der Kurvenscheibe 142 und bildet mit seinem freien Ende einen Anschlag für die Stufe 142''. In dieser in Fig. 12 dargestellten Schwenklage würde deshalb der Schwenkhebel 143 die Rückenlehne auch dann blockieren, wenn die Sperrklinke 140 nicht in Eingriff mit der Nut 155 wäre.

Wie die Fig. 10 und 11 zeigen, weist der sich vom Nietbolzen 139 aus nach unten erstreckende Arm des Schwenkhebels 143 ein Maul 158 auf, das auf den Verbindungszapfen 151 ausgerichtet ist. Dieser ist im Schwenkbereich des Maules 158 beidseitig mit je einer Abflachung 159 versehen, deren Winkellage und Abstand voneinander so gewählt sind, daß das Maul 158 den abgeflachten Abschnitt des Verbindungszapfens 151 nahezu spielfrei aufnehmen kann, wenn sich die Spannklinge 141 in der Spannstellung befindet. Wenn der Schwenkhebel 143 den oberen Beschlagteil 135 in der nach vorne geklappten Schwenklage blockiert, blockiert er gleichzeitig die Spannklinge 141, so daß die Sperrklinke 140 nicht aus der Nut 155 austreten kann. Hierdurch wird zuverlässig verhindert, daß die Sicherheitseinrichtung allein die Rückenlehne in der nach vorne geklappten Stellung blockieren muß.

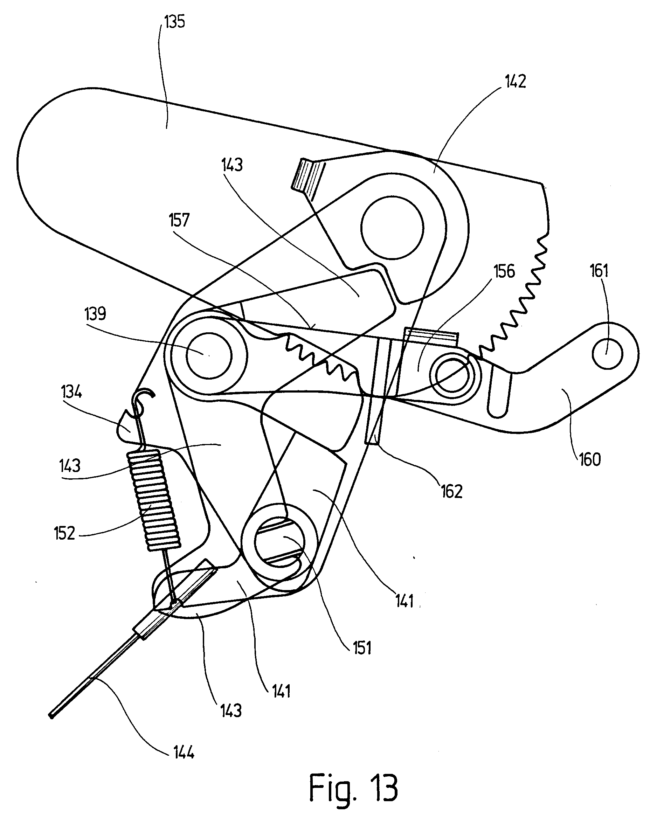

Wenn nunmehr der zusammengefaltete Sitz in eine vertikale Lage geschwenkt werden soll, ist es erforderlich, zuvor seine durch eine Gasdruckfeder 131 gebildete Feststellvorrichtung zu lösen. Hierfür ist an das freie Ende des Betätigungshebels 156 beider Gelenkbeschläge ein Auslösehebel 160 mit begrenztem Schwenkbereich angelenkt, wobei die Schwenkachse des einen Auslösehebels 160 mit derjenigen des anderen Auslösehebels 160 fluchtet. Ferner sind, wie Fig. 8 zeigt, die beiden Auslösehebel 160 im Bereich ihres freien Endes durch eine Stange 161 verwindungssteif miteinander verbunden. Diese Stange 161 kann als Haltegriff benutzt werden, um die beiden Betätigungshebel 156 gleichzeitig in die in Fig. 12 dargestellte Schwenklage zu schwenken und danach auch die beiden Auslösehebel 160 in die in Fig. 13 dargestellte Position zu schwenken, in welcher über einen nicht dargestellten Bowdenzug, dessen Seele an den Auslösehebel 160 angehängt ist und dessen Mantel an einem Ansatz 162 des Betätigungshebels 156 abgestützt ist, die Gasdruckfeder 131 freigegeben wird.

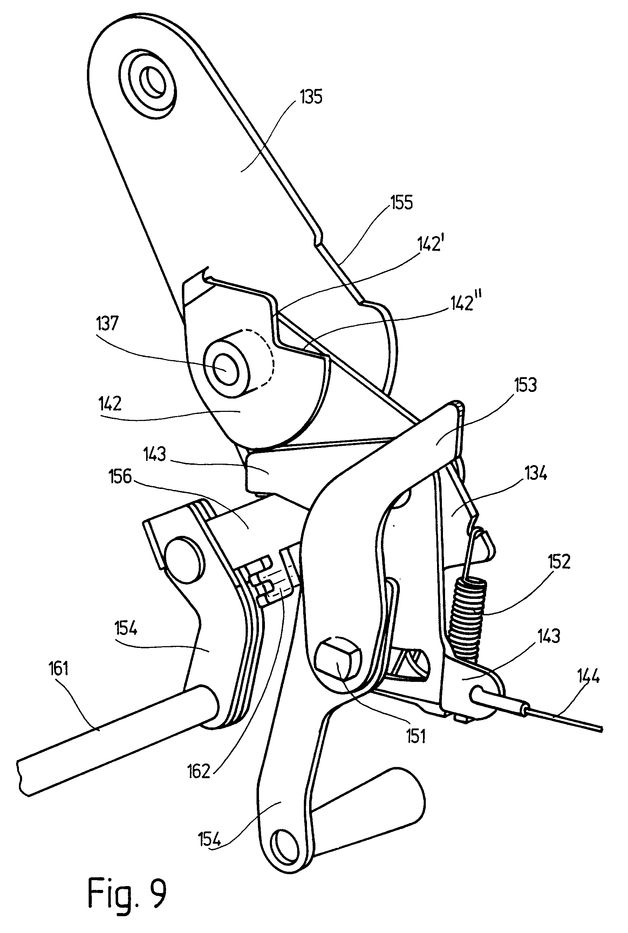

Ein Zurückschwenken der Auslösehebel 160 in die in den Fig. 8 bis 12 dargestellte Ausgangslage und ein Zurückschwenken des Betätigungshebels 156 in die in den Fig. 10 und 11 dargestellte Ausgangslage hat nur zur Folge, daß die Gasdruckfeder blockiert wird. Der Schwenkhebel 143 bleibt hingegen in der in den Fig. 12 und 13 dargestellten Verriegelungsstellung, weil der Betätigungshebel 156 den Schwenkhebel 143 nur in der anderen Schwenkrichtung mitnimmt und der Bowdenzug 144 eine Schwenkbewegung verhindert.

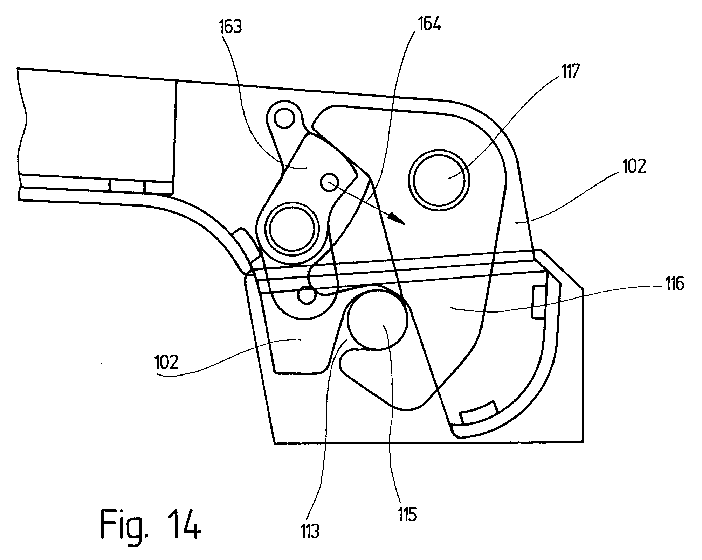

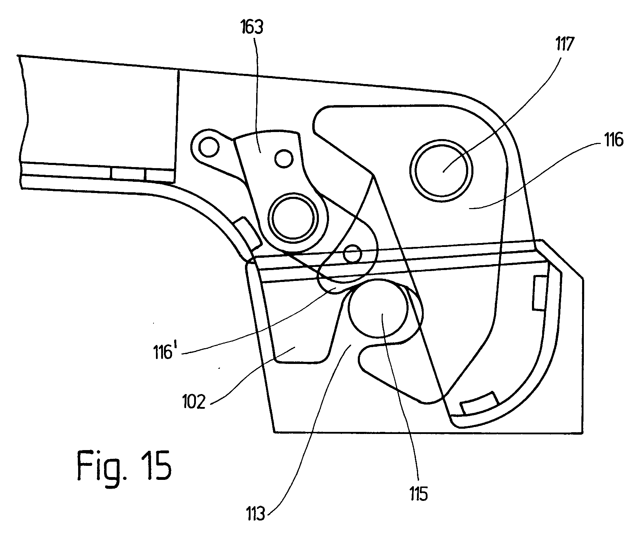

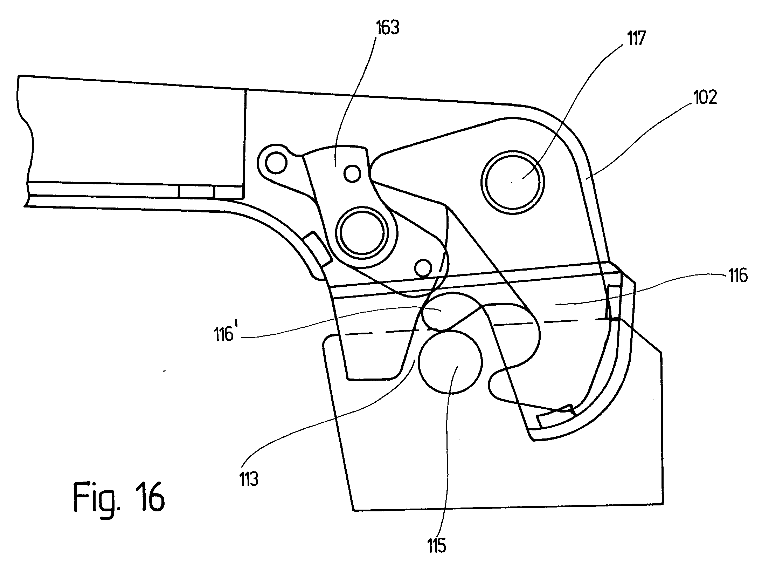

Wie Fig. 14 zeigt, weist jeder der beiden gleich ausgebildeten hinteren Füße 102 ein nach unten offenes Maul 113 auf, das einen in einer Vertiefung der Bodenstruktur des Fahrzeuges angeordneten und mit dieser Struktur fest verbundenen Bolzen 115 aufnimmt, der in Sitzquerrichtung verläuft. Ein parallel zum Bolzen 115 liegender Gelenkzapfen 117 des hinteren Fußes 102 trägt schwenkbar einen Haken 116 einer Verriegelungsvorrichtung. Wie Fig. 14 zeigt, untergreift der Haken 116 in seiner Verriegelungsstellen den Bolzen 115 und wird von einer Spannklinke 163 gegen den Bolzen 115 gedrückt. Der Haken 116 ist so ausgebildet, daß er den hinteren Fuß 102 nicht nur formschlüssig, sondern auch spielfrei mit dem Bolzen 115 zu verbinden vermag. Eine an der Spannklinke 163 angreifende, vorgespannte Feder, deren Wirkung durch den Pfeil 164 dargestellt ist, belastet ständig die Spannklinke 163 im Sinne des Spannens. Der mit dem Schwenkhebel 143 verbundene Bowdenzug 144 ist andererseits mit einem zweiten Arm der Spannklinke 163 so verbunden, daß bei einer Schwenkbewegung des Schwenkhebels 143 im Uhrzeigersinn bei einer Blickrichtung gemäß den Fig. 10 bis 13 die Spannklinke 163 in die in Fig. 15 dargestellte Schwenklage kommt, in welcher sie den Haken 116 freigibt, den nun eine an ihm angreifende, vorgespannte Feder entgegen dem Uhrzeigersinn bei einer Blickrichtung gemäß den Fig. 14 bis 16 schwenkt. Diese Schwenkbewegung hat zur Folge, daß eine am Haken 116 vorgesehene Nase 116' von oben gegen den Bolzen 115 drückt und in dem Maße eine Schwenkbewegung des Hakens 116 zu seiner in Fig. 16 dargestellten Freigabestellung hin zuläßt, in welcher der Fuß 102 nach oben bewegt wird. In der Freigabestellung kommt, wie Fig. 16 zeigt, der Haken 116 in Anlage an eine Flanke der Spannklinge 163 und wird dadurch in dieser Schwenklage festgehalten.

Die Spannklinke 163 ist über den Bowdenzug 144 der Sicherheitseinrichtung derart gekoppelt, daß der Haken 116 nur dann in die Freigabestellung geschwenkt werden kann, in welcher der hintere Fuß 102 nicht mehr mit dem Bolzen 115 verbunden ist, wenn die Rückenlehne nach vorne geklappt und in dieser Lage verriegelt worden ist. Insbesondere kann die Rückenlehne erst dann wieder aus der nach vorne geklappten Position in eine Gebrauchslage geschwenkt werden, wenn zuvor die Verbindung zwischen dem hinteren Fuß 102 und dem Bolzen 105 hergestellt worden ist. Hierzu ist zunächst erforderlich, daß der hintere Fuß 102 bis zu einer Lage des Bolzens 115 am Grund des Maules 113 abgesenkt worden ist. Dabei wird wegen der Anlage der Nase 116' des Hakens 116 am Bolzen 115 der Haken 116 zwangsläufig in seine Verriegelungsposition geschwenkt, in welcher er den Bolzen 115 untergreift. Nun erst kann die Spannklinke 163 in die Spannstellung schwenken, was wegen der Verbindung über den Bowdenzug 144 Voraussetzung dafür ist, daß der Schwenkhebel 143 in seine Freigabestellung geschwenkt werden kann, in welcher er die Kurvenschweibe 142 und den Verbindungszapfen 151 freigibt. Nun erst kann die Spannklinge 141 wieder in ihre Freigabestellung geschwenkt werden, in welcher der obere Beschlagteil 135 in eine der Gebrauchslagen der Rückenlehne entsprechende Schwenklage zurückgeschwenkt werden kann.

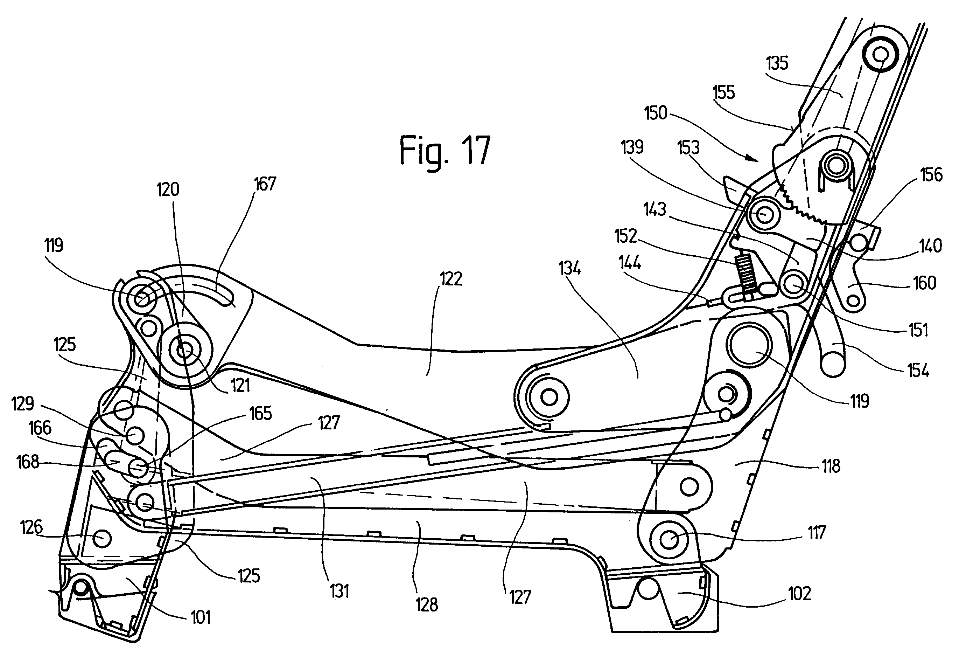

In den Fig. 17 bis 20 ist die tragende Struktur des Rücksitzes oder der Rücksitzbank gemäß dem zweiten Ausführungsbeispiel dargestellt, wobei nur in Fig. 17 der mit der tragenden Struktur 123 des Sitzteils verbundene untere Beschlagteil 134 und der mit der tragenden Struktur der Rückenlehne 136 verbundene obere Beschlagteil 135 dargestellt ist.

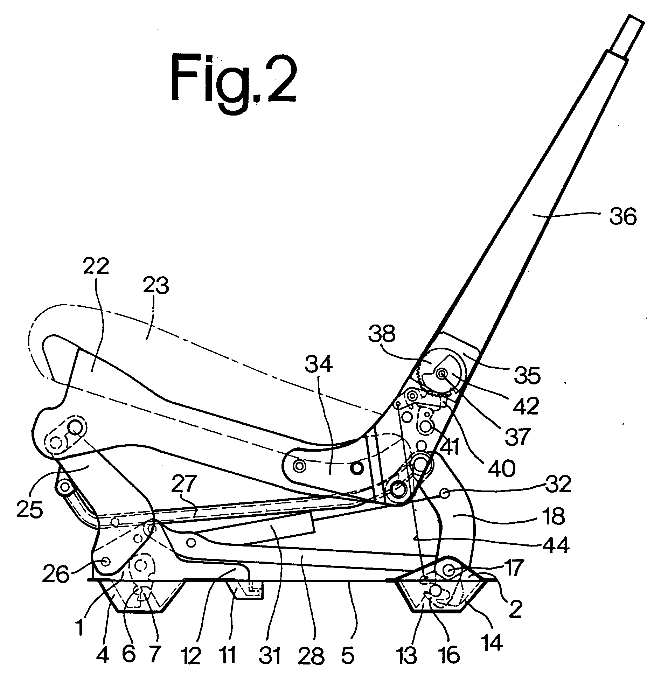

Wie bei dem Ausführungsbeispiel gemäß den Fig. 1 bis 7 sind zwei gleich ausgebildete, vordere Sitzfüße 101 und zwei ebenfalls gleich ausgebildete hintere Sitzfüße 102 vorgesehen. Anders als beim ersten Ausführungsbeispiel sind jedoch die beiden hinteren Sitzfüße 102 einstückig mit einem Längsholm 128 ausgebildet, welcher die Zugkoppel 28 des ersten Ausführungsbeispiels ersetzt, jedoch wie diese schwenkbar um eine in Sitzquerrichtung verlaufende Achse 129 mit einer vorderen Schwinge 125 verbunden ist. Ein parallel zur Achse 129 angeordneter Zapfen 165 greift in einen zur Achse 129 konzentrischen Schlitz 166 ein. Ein Gelenkzapfen 126 mit in Sitzquerrichtung verlaufender Längsachse verbindet den vorderen Fuß 101 schwenkbar mit der vordern Schwinge 125. Die vordere Schwinge 125 ist einerseits schwenkbar mit einer Ausgleichslasche 120 verbunden, die andererseits seitlich an der tragenden Struktur 122 des Sitzteils mit zum Gelenkzapfen 126 paralleler Achse 121 angelenkt ist. In einen konzentrisch zur Achse 121 verlaufenden Schlitz 167 greift ein Verbindungszapfen 119 ein, welcher die vordere Schwinge 125 mit der Ausgleichsschwinge 120 verbindet.

Je ein Gelenkzapfen 117 verbindet jeden der beiden hinteren Füße 102 mit einer hinteren Schwinge 118, die im Bereich ihres oberen Endes mittels je eines Verbindungszapfens 119 seitlich an der tragenden Struktur 122 angelenkt sind.

Wie insbesondere die Fig. 17 bis 19 erkennen lassen, ist eine als Koppel 127 dienende Stange an der hinteren Schwinge 118 nahe dem sie mit dem hinteren Fuß 102 verbindenden Gelenkzapfen 117 und mit der vorderen Schwinge 125 etwa in der Mitte zwischen den Verbindungsstellen mit dem vorderen Fuß 101 und der tragenden Struktur 122 des Sitzteils schwenkbar verbunden. Die Beweglichkeit des aus der hinteren Schwinge 118, der vordern Schwinge 125, der Koppel 127 und dem Längsholm 128 gebildeten Gelenkviereckes ist nicht nur durch den Schlitz 166 und den in ihn eingreifenden Zapfen 165 begrenzt, sondern auch durch einen Schlitz 168, in den der Zapfen 165 ebenfalls eingreift und der konzentrisch zum Gelenkzapfen 126 verläuft.

Fixiert wird das Gelenkviereck mittels der Gasdruckfeder 131, die im Sinne einer Verlängerung ihrer wirksamen Länge vorgespannt und stufenlos innerhalb ihres Längenverstellbereiches verstellbar und feststellbar ist. Diese Gasdruckfeder 131 ist im Bereich der vorderen Schwinge 125 am Längsholm 128 und in der oberen Hälfte der hinteren Schwinge 118 an dieser angelenkt. Um die Gasdruckfeder 131 freizugeben, damit ihre wirksame Länge verändert werden kann, muß auf ein nicht dargestelltes Betätigungsglied ein Zug ausgeübt werden, was im Ausführungsbeispiel mittels des Bowdenzuges erfolgt, dessen Mantel am Ansatz 162 des Betätigungshebels 156 abgestützt ist und dessen Seele mit dem Auslösehebel 160 verbunden ist.

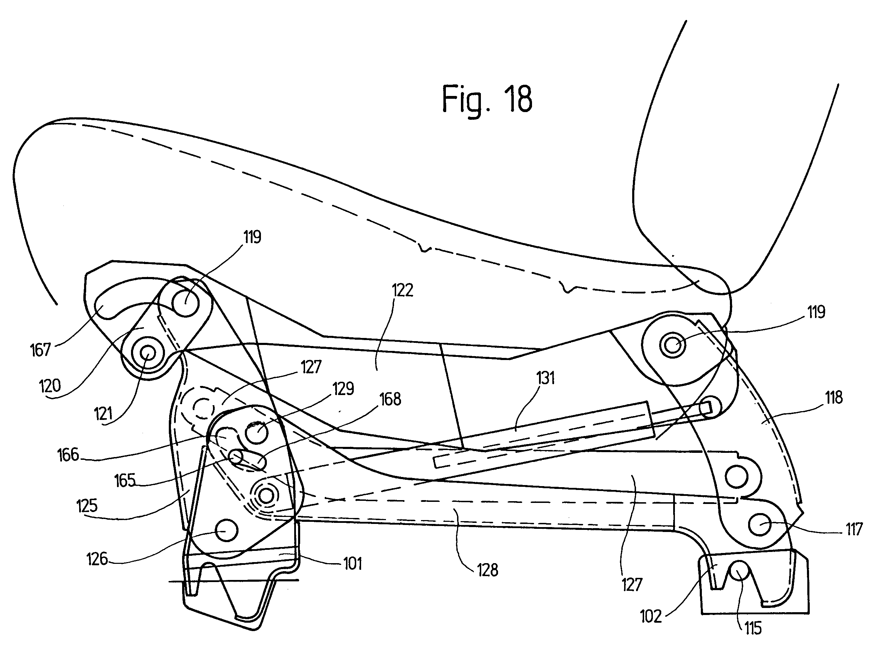

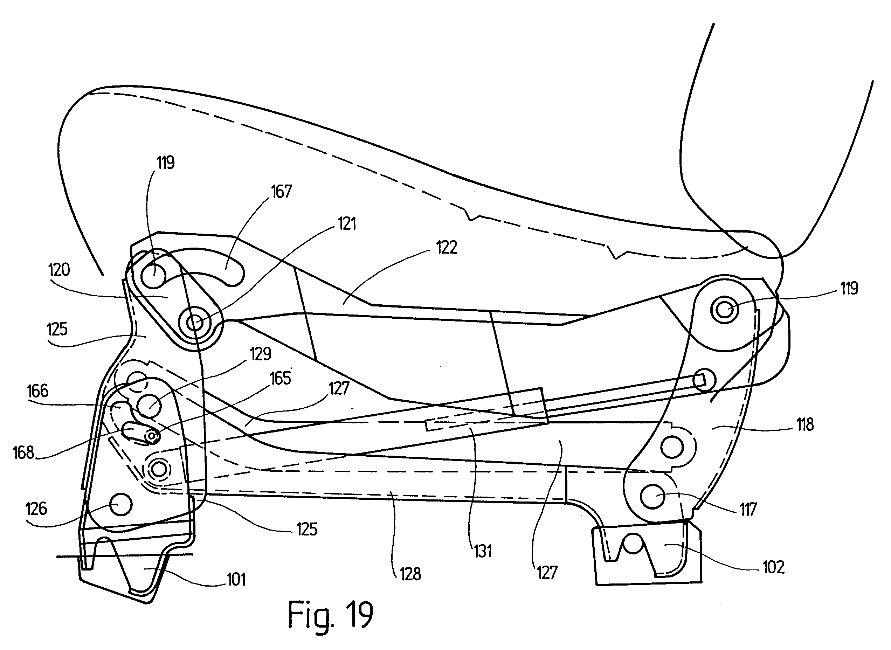

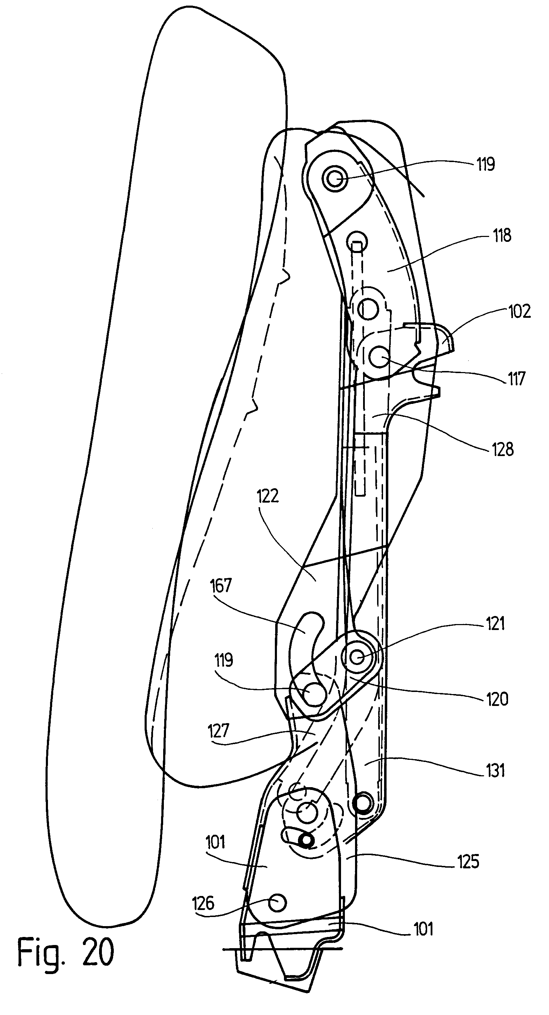

Der Sitz kann stufenlos zwischen der in Fig. 18 dargestellten vordersten Sitzposition und der in Fig. 19 dargestellten hintersten Sitzposition in Sitzlängsrichtung verstellt werden, wenn zuvor die Gasdruckfeder 131 freigegeben worden, welche im blockierten Zustand den Sitz in der gewählten Längseinstellung fixiert. Die Kraft der Gasdruckfeder 131 unterstützt die Bewegung des Sitzteils mit an ihm anliegender Rückenlehne in die in Fig. 20 dargestellte vertikale Lage, in welcher der Sitz durch die Gasdruckfeder 131 festgehalten wird. Zweckmäßigerweise wird der Sitz in diese vertikale Lage gebracht, ehe die Verbindung der vorderen Füße 101 mit der Bodenstruktur für einen Ausbau des Sitzes gelöst wird. Auch der Einbau des Sitzes erfolgt zweckmäßigerweise in dieser Schwenklage.

Die Vorteile des zweiten Ausführungsbeispiels gegenüber dem ersten Ausführungsbeispiel sind vor allem darin zu sehen, daß das Sitzgestell konstruktiv einfacher und damit auch preiswerter ist. Außerdem wird verhindert, daß eine an der Rückenlehne vorgesehene Kopfstütze dann, wenn der gefaltete Sitz nach vorne geklappt wird, an den Fahrzeugboden angedrückt wird.

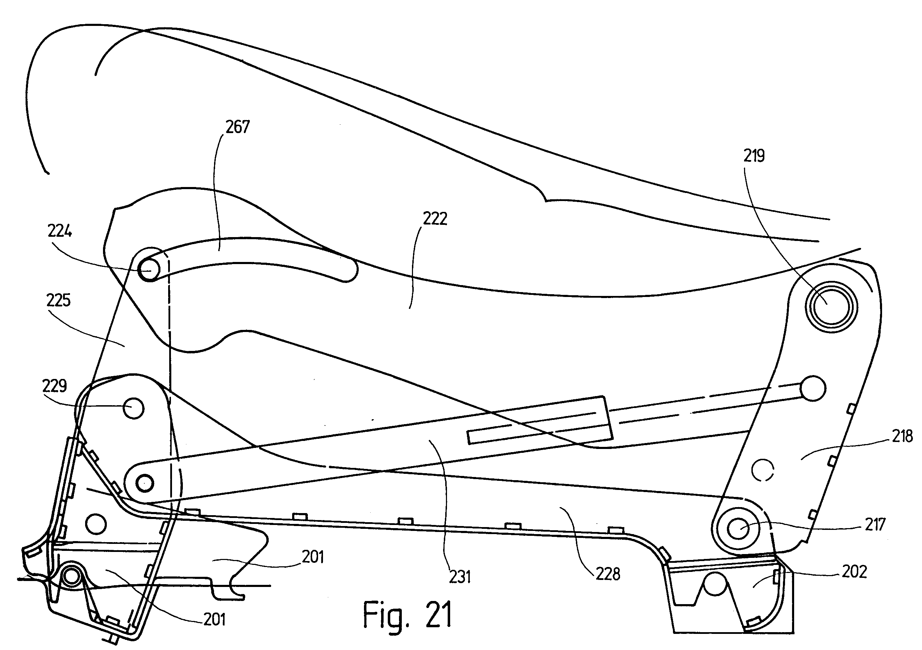

Das in Fig. 21 schematische dargestellte dritte Ausführungsbeispiel ist insofern noch weiter gegenüber dem ersten und zweiten Ausführungsbeispiel vereinfacht, als hier statt der beiden vorderen Schwingen nur zwei Stützen 225 benötigt werden, welche einstückig mit dem vorderen Fuß 201 ausgebildet sein können, und daß außerdem die Koppel 27, 127 entfallen ist. Dennoch kann der Sitz in Längsrichtung eingestellt und mit nach vorne geklappter Lehne in eine vertikale Lage geschwenkt werden. Hierzu trägt die Verbindung der vorderen Stützen 225 mit der tragenden Struktur 222 mittels je eines Zapfens 224 bei, der in einem Schlitz 267 geführt ist. Dieser Schlitz 267 hat einen Krümmungsradius, der zumindest annähernd dem Abstand zwischen dem Gelenkzapfen 217 und dem Verbindungszapfen 219 entspricht, welche die hintere Schwinge 218 gelenkig mit dem hinteren Fuß 202 bzw. der tragenden Struktur 222 des Sitzteils verbinden. Fixiert wird das Sitzgestell wie bei den anderen Ausführungsformen durch eine Gasdruckfeder 231 die einerseits im vorderen Endbereich des Längsholms 228 und andererseits etwas unterhalb des Verbindungszapfens 219 mit der hinteren Schwinge 218 schwenkbar verbunden ist.

Die Verbindung des Sitzteils mit der Rückenlehne erfolgt wie bei dem zweiten Ausführungsbeispiel mittels eines Gelenkbeschlagpaares, das wie dasjenige gemäß den Fig. 8 bis 13 ausgebildet ist. Für die Verbindung der vorderen und hinteren Füße 201 bzw. 202 ist je eine Verriegelungsvorrichtung vorgesehen, wie sie in den Fig. 14 bis 16 dargestellt ist. Deshalb kann auch bei diesem dritten Ausführungsbeispiel die Verbindung der hinteren Füße 201 mit der Bodenstruktur des Fahrzeuges erst gelöst werden, wenn die Rückenlehne nach vorne geklappt und in dieser Lage verriegelt ist. Der so zusammengefaltete Sitz kann dann nach vorne in eine vertikale Lage geschwenkt werden. Dabei schwenkt der Längsholm 228 um die ihn mit der zugeordneten vorderen Stütze 225 verbindende Achse 229 und die tragende Struktur 222 um den Zapfen 224. Ferner kommt jede der beiden hinteren Schwingen 218 in eine Schwenklage, wie sie Fig. 20 zeigt.

## Patentansprüche

1. Kraftfahrzeugsitz, insbesondere Rücksitz oder Rücksitzbank, mit einem Sitzgestell, das hintere Füße aufweist, die mittels einer manuell lösbaren Verriegelungsvorrichtung mit der Bodenstruktur des Fahrzeuges verbindbar sind, und mit einer Rückenlehne, die mit dem Sitzgestell über arretierbare Gelenkbeschläge verbunden ist, welche im gelösten Zustand ihrer Arretierungsvorrichtung gestatten, die Rückenlehne nach vorne zu klappen, wobei die Verriegelungsvorrichtung (16; 116, 116', 163) mit einer der Rückenlehne zugeordneten Sicherheitseinrichtung (42, 43; 142, 143, 156) gekoppelt ist, welche
a) die Verriegelungsvorrichtung (16; 116, 116', 163) nur für ein Lösen der Verbindung zwischen den Füßen (2; 102) und der Bodenstruktur freigibt, wenn die Rückenlehne sich in ihrer nach vorne geklappten Schwenklage befindet,
b) die Rückenlehne in der nach vorne geklappten Schwenklage formschlüssig gegen ein Zurückschwenken in die Gebrauchslage sichert und
c) die Sicherung der Rückenlehne in der nach vorne geklappten Schwenklage erst wieder freigibt, wenn die hinteren Füße (2; 102) mit der Bodenstruktur des Fahrzeuges mittels der Verriegelungsvorrichtung (16; 116, 116', 163) verbunden sind,
wobei die Sicherheitseinrichtung (42, 43; 142, 143, 156) eine konzentrisch zur Schwenkachse (37; 137) der Rückenlehne angeordnete und mit dieser drehfest verbundene Sperrscheibe (42; 142) aufweist, welche ein mit ihr zusammenwirkendes Sperrelement (43; 143) in allen Schwenklagen der Rückenlehne mit Ausnahme der Schwenklage bei nach vorne geklappter Rückenlehne in einer ersten Sperrlage hält, in welcher die Verriegelungsvorrichtung (16; 116, 116', 163) gegen ein Lösen gesichert ist, und in der nach vorne geklappten Schwenklage der Rückenlehne eine Bewegung des Sperrelementes (43; 143) infolge eines Lösens der Verriegelungsvorrichtung (16; 116, 116', 163) gestattet, dadurch gekennzeichchnet, daß das Sperrelement (43, 143) sich in eine zweite Sperrlage bewegt, in welcher es die Sperrscheibe (42; 142) gegen eine Drehung im Sinne eines Zurückklappens der Rückenlehne in die Gebrauchslage sichert und die es nur bei einem Schließen der Verriegelungsvorrichtung (16; 116, 116', 163) wieder verläßt.

2. Kraftfahrzeugsitz nach Anspruch 1, dadurch gekennzeichnet, daß die Sperrscheibe als eine Kurvenscheibe (42; 142) mit zwei verschieden hohen, über eine Stufe (142'') miteinander verbundenen, zylindrischen Kurvenabschnitten und das Sperrelement als Schwenkhebel (43; 143) ausgebildet ist, der in einer der ersten Sperrlage entsprechenden ersten Schwenklage an dem hohen Kurvenabschnitt und in einer der zweiten Sperrlage entsprechenden zweiten Schwenklage am niedrigen Kurvenabschnitt (42'; 142') anliegt und hier einen Anschlag für die Stufe (142'') bildet.

3. Kraftfahrzeugsitz nach Anspruch 2, dadurch gekennzeichnet, daß die Sicherheitseinrichtung einen Betätigungshebel (156) aufweist, der drehbar auf der Achse (139) des Schwenkhebels (143) gelagert ist und nur in dem einem Lösen der Verriegelungsvorrichtung (116, 116', 163) entsprechenden Schwenksinn mit dem Schwenkhebel (143) für eine zwangsläufige Mitnahme bis in die zweite Schwenklage gekuppelt ist.

4. Kraftfahrzeugsitz nach Anspruch 2 oder 3, dadurch gekennzeichnet, daß die Rückenlehne sowohl in unterschiedlichen Gebrauchslagen als auch in der nach vorne geklappten Schwenklage mittels einer Rastklinke (140) arretierbar ist, welche mittels eines Spannexzenters (141), der drehfest mit einem parallel zur Schwenkachse (139) des Schwenkhebels (143) im Beschlag gelagerten Zapfen (151) verbunden ist, in Eingriff mit Rasten haltbar ist, und daß der Zapfen (151) mittels des Schwenkhebels (143, 158) gegen eine Drehung gesichert ist, wenn sich der Schwenkhebel (143) in seiner zweiten Schwenklage befindet.

5. Kraftfahrzeugsitz nach Anspruch 4, dadurch gekennzeichnet, daß der Zapfen (151) im Schwenkbereich des Schwenkhebels (143, 158) einen als Mehrkant ausgebildeten Abschnitt und der Schwenkhebel (143, 158) ein auf diesen ausgerichtetes und an ihn angepaßtes Maul (158) aufweist, das in der zweiten Schwenklage den Abschnitt unter Bildung einer Drehsicherung aufnimmt.

6. Kraftfahrzeugsitz nach Anspruch 5, dadurch gekennzeichnet, daß der Schwenkhebel (143) einen mit der Kurvenscheibe (142) zusammenwirkenden Arm und einen mit dem Maul (158) versehenen Arm aufweist.

7. Kraftfahrzeugsitz nach einem der Ansprüche 3 bis 6, dadurch gekennzeichnet, daß sowohl der Schwenkhebel (143) als auch die Sperrklinke (140) und der Betätigungshebel (156) mittels eines einzigen, parallel zur Gelenkachse (137) angeordneten Lagerbolzens (139) am Gelenkbeschlag drehbar gelagert sind.

8. Kraftfahrzeugsitz nach einem der Ansprüche 3 bis 7, dadurch gekennzeichnet, daß an den Betätigungshebel (156) mit begrenztem Schwenkbereich ein Auslösehebel (160) für eine längenveränderbare Feststellvorrichtung angelenkt ist und die Auslösehebel (160) beider Gelenkbeschläge vorzugsweise über eine parallel zur Gelenkachse (137) liegende Stange (161) für eine gemeinsame Betätigung starr miteinander verbunden sind.

9. Kraftfahrzeugsitz nach einem der Ansprüche 1 bis 8, dadurch gekennzeichnet, daß jeder der beiden hinteren Füße (2; 102) als Verriegelungsvorrichtung einen schwenkbar gelagerten Haken (116, 116'), welcher im verriegelten Zustand einen Bolzen (115) der Bodenstruktur umgreift, und eine federbelastete, drehbar gelagerte Spannklinke (163) aufweist, welche in ihrer wirksamen Schwenklage den Haken (116, 116') in Anlage am Bolzen (115) hält und mittels des Betätigungshebels (156) der Sicherheitseinrichtung entgegen der Federkraft in eine Freigabestellung schwenkbar ist, in welcher der Haken (116, 116') durch die Kraft einer an ihm angreifenden Rückstellfeder seine den Bolzen (115) freigebende Entriegelungsstellung einnimmt.

10. Kraftfahrzeugsitz nach Anspruch 9, dadurch gekennzeichnet, daß der Haken (116, 116') eine Nase (116') aufweist, die bei der Schwenkbewegung des Hakens (116, 116') in die Entriegelungsstellung von oben gegen den Bolzen (115) drückt und dadurch den Fuß (102) anhebt.

11. Kraftfahrzeugsitz nach einem der Ansprüche 1 bis 10, gekennzeichnet durch
a) zwei vordere Stützen (25; 125; 225), die lösbar mit der Bodenstruktur des Fahrzeuges verbindbar sind und deren oberer Endabschnitt mit der einen bzw. anderen Seite der tragenden Struktur (22; 122; 222) des Sitzteils um eine in Sitzquerrichtung verlaufende obere Achse (24; 119; 224) schwenkbar verbunden ist,
b) zwei hintere Schwingen (18; 118; 218), deren unterer Endabschnitt um eine in Sitzquerrichtung verlaufende untere Achse (17; 117; 217) mit dem einen bzw. anderen hinteren Sitzfuß (2; 102; 202) und deren oberer Endabschnitt um eine zur unteren Achse (17; 117; 217) parallele obere Achse (19; 119; 219) schwenkbar mit der einen bzw. anderen Seite der tragenden Struktur (22; 122; 222) des Sitzteils verbunden ist,
c) eine Feststellvorrichtung (31; 131; 231), mittels deren die hinteren Schwingen (18; 118; 218) in wählbaren, unterschiedlichen Sitzlängseinstellungen entsprechenden Schwenkstellungen arretierbar sind.

12. Kraftfahrzeugsitz nach Anspruch 11, dadurch gekennzeichnet, daß die Feststellvorrichtung (31; 131; 231) wenigstens ein in seiner wirksamen Länge stufenlos veränderbares sowie in jeder Längeneinstellung feststellbares Zylinder-Kolben-Aggregat aufweist, das einerseits an der hinteren Schwinge (18; 118; 218) im Abstand von den Verbindungsstellen mit dem hinteren Fuß (2; 102; 202) bzw. der tragenden Struktur (22; 122; 222) des Sitzteils und andererseits im Bereich der vorderen Stütze (25; 125; 225) an einem mit dieser schwenkbar verbundenen Längsholm (28; 128; 228) angelenkt ist.

13. Kraftfahrzeugsitz nach Anspruch 12, dadurch gekennzeichnet, daß der Längsholm (28; 128; 228) im Bereich seines hinteren Endes schwenkbar mit dem hinteren Fuß (2) verbunden oder einstückig mit diesem (102; 202) ausgebildet ist.

14. Kraftfahrzeugsitz nach Anspruch 12 oder 13, dadurch gekennzeichnet, daß das Zylinder-Kolben-Aggregat (31; 131; 231) im Sinne einer Vergrößerung seiner wirksamen Länge vorgespannt ist.

15. Kraftfahrzeugsitz nach einem der Ansprüche 11 bis 14, dadurch gekennzeichnet, daß die beiden vorderen Stützen aus je einem Fuß (1; 101) und einer im Bereich ihres unteren Endes an diesem angelenkten vorderen Schwinge (25; 125) bestehen.

16. Kraftfahrzeugsitz nach Anspruch 15, dadurch gekennzeichnet, daß wenigstens die eine vordere Schwinge (25) mit dem sie tragenden vorderen Fuß (1) verriegelbar ist.

17. Kraftfahrzeugsitz nach Anspruch 15 oder 16, dadurch gekennzeichnet, daß die hintere (18) oder die vordere (125) Schwinge über je eine Ausgleichsschwinge (20; 120) mit der tragenden Struktur (22; 122) des Sitzteils schwenkbar verbunden ist.

18. Kraftfahrzeugsitz nach Anspruch 17, dadurch gekennzeichnet, daß der Verbindungszapfen (119), welcher die vordere Schwinge (125) mit der Ausgleichsschwinge (120) schwenkbar verbindet, in einen in der tragenden Struktur (22) des Sitzteils vorgesehenen Schlitz (167) eingreift, der konzentrisch zu der Achse (121) verläuft, welche die Ausgleichsschwinge (120) gelenkig mit der tragenden Struktur (122) verbindet.

19. Kraftfahrzeugsitz nach einem der Ansprüche 15 bis 18, dadurch gekennzeichnet, daß die vorderen Stützen (225) über je einen Zapfen (224) mit der tragenden Struktur (222) des Sitzteils verbunden sind, der in einem in der tragenden Struktur (222) vorgesehenen Schlitz (267) längs einer Bahn verschiebbar ist, welche der Bahn des Verbindungszapfen (219), der die hintere Schwinge (218) mit der tragenden Struktur (222) des Sitzteils verbindet, bei einer Sitzlängseinstellung entspricht.

20. Kraftfahrzeugsitz nach einem der Ansprüche 1 bis 19, dadurch gekennzeichnet, daß die beiden vorderen Sitzfüße (1; 201) außer einem nach unten offenen Maul (3) zur Aufnahme eines sich in Sitzquerrichtung erstreckenden Verbindungsbolzens (6) der Bodenstruktur (5) des Fahrzeuges und einer in ihrer Sperrstellung ein Austreten des Verbindungsbolzens (6) aus dem Maul (3) formschlüssig sperrenden Verriegelungseinrichtung (7, 8, 9) eine gegen den hinteren Sitzfuß (2; 202) versetzt angeordnete zweite Verbindungseinrichtung (12) aufweisen, die mit der Bodenstruktur (5) des Fahrzeuges verbunden sein muß, ehe das Maul (3) auf den Verbindungsbolzen (6) aufgesetzt und mit diesem verriegelt werden kann.

21. Kraftfahrzeugsitz nach Anspruch 20, dadurch gekennzeichnet, daß die Verriegelungseinrichtung einen schwenkbar am vorderen Sitzfuß (1) gelagerten Haken (7), der in seiner Sperrstellung den Verbindungsbolzen (6) hintergreift, und einen manuell betätigbaren Hebel (8) aufweist, der um eine zur Schwenkachse des Hakens (7) parallele Achse am vorderen Sitzfuß (1) gelagert ist und einen Anschlag (9) aufweist, der in der Sperrstellung des Hebels (8) und des Hakens (7) diesen formschlüssig gegen eine Bewegung in die Freigabestellung blockiert.

## Claims

1. Vehicle seat, especially a rear seat or rear bench-type seat, having a seat frame that has rear feet that are arranged to be connected by means of a manually releasable locking device to the floor structure of the vehicle, and having a back rest that is connected to the seat frame by means of lockable hinge-type fittings which, when their retaining device is in a released state, allow the back rest to be folded forwards, the locking device (16; 116, 116', 163) being coupled to a safety device (42, 43; 142, 143,156) associated with the back rest, which safety device
a) frees the locking device (16; 116, 116', 163) for release of the connection between the feet (2; 102) and the floor structure only when the back rest is located in its folded-forward position,
b) positively secures the back rest in its folded-forward pivoted position against being pivoted backwards into the position of use and
c) only re-releases the means securing the back rest in the folded-forward pivoted position when the rear feet (2; 102) are connected to the floor structure of the vehicle by means of the locking device (16; 116, 116', 163),
wherein the safety device (42, 43; 142, 143, 156) comprises a locking disc arranged concentrically with respect to the axis of articulation (37; 137) of the back rest and connected non-rotatably thereto, which locking disc holds a locking element (43, 143) that co-operates with it in all pivoted positions of the back rest, with the exception of the pivoted position in which the back rest is folded forwards, in a first locking position in which the locking device (16; 116, 116', 163) is secured against release, and in the folded-forward pivoted position of the back rest permits a movement of the locking element (43; 143) as a consequence of release of the locking device (16; 116, 116', 163), characterised in that the locking element (43, 143) moves into a second locking position, in which it secures the locking disc (42; 142) against rotation allowing the back rest to be folded back into the position of use, and which it leaves again only when the locking device (16; 116, 116', 163) closes.

2. Vehicle seat according to claim 1, characterised in that the locking disc is in the form of a cam disc (42; 142) having two cylindrical cam portions of different heights connected to one another by a step (142'') and the locking element is in the form of a pivoted lever (43; 143) which, in a first pivoted position corresponding to the first locked position abuts the high cam portion, and in a second pivoted position corresponding to the second locked position abuts the low cam portion (42'; 142'), and here forms a stop means for the step (142'').

3. Vehicle seat according to claim 2, characterised in that the safety device comprises an operating lever (156) which is rotatably mounted on the axle (139) of the pivoted lever (143) and only in the pivoting direction corresponding to release of the locking device (116, 116', 163) is coupled with the pivoted lever (143) for entrained movement into the second pivoted position.

4. Vehicle seat according to claim 2 or 3, characterised in that the back rest is arranged to be retained both in different positions of use and in the folded-forward pivoted position by means of a retaining pawl (140) that is arranged to be held in engagement with holding notches by means of a checking eccentric (141) connected non-rotatably to a pin (151) mounted in the fitting parallel to the axis of articulation (139) of the pivoted lever (143), and the pin (151) is secured by means of the pivoted lever (143, 158) against rotation when the pivoted lever (143) is located in its second pivoted position.

5. Vehicle seat according to claim 4, characterised in that the pin (151) has a multiple-cornered portion in the pivoting range of the pivoted lever (143, 158), and the pivoted lever (143, 158) has a mouth (158) aligned and matched therewith, which in the second pivoted position receives the portion to form a means safeguarding against rotation.

6. Vehicle seat according to claim 5, characterised in that the pivoted lever (143) comprises an arm cooperating with the cam disc (142) and an arm provided with the mouth (158).

7. Vehicle seat according to any one of claims 3 to 6, characterised in that both the pivoted lever (143) and the retaining paw (140) and the operating lever (156) are rotatably mounted on the hinge-type fitting by means of a single bearing bolt (139) arranged parallel to the axis of articulation (137).

8. Vehicle seat according to any one of claims 3 to 7, characterised in that on the operating lever (156) of restricted pivoting range there is mounted a release lever (160) for a variable-length arresting device and for joint actuation the release levers (160) of both hinge-type fittings are rigidly connected to one another, preferably by means of a rod (161) lying parallel to the axis of articulation (137).

9. Vehicle seat according to any one of claims 1 to 8, characterised in that each of the two rear feet (2; 102) comprises, as locking device, a pivotally mounted catch (116, 116'), which in the locked state engages around a bolt (115) of the floor structure, and a spring-loaded rotatably mounted checking paw (163), which in its effective pivoted position holds the catch (116, 116') in engagement with the bolt (115) and by means of the operating lever (156) of the safety device is pivotable, against the spring force, into a release position in which the catch (116, 116'), by virtue of the force of a restoring spring acting on it, takes up its unlocking position freeing the bolt (115).

10. Vehicle seat according to claim 9, characterised in that the catch (116, 116') has a projection (116') which, during the pivoting movement of the catch (116, 116') into the unlocking position, presses from above against the bolt (115) and hence raises the foot (102).

11. Vehicle seat according to any one of claims 1 to 10 characterised by
a) two front supports (25; 125; 225) that are arranged to be releasably connected to the floor structure of the vehicle and the upper end portion of which is connected to a respective side of the supporting structure (22; 122; 222) of the seat part so as to pivot about an upper axle (24; 119; 224) running in the transverse direction of the seat,
b) two rear rockers (18; 118; 218), the lower end portion of which is connected to a respective rear seat foot (2; 102; 202) so as to pivot about a lower axle (17; 117; 217) running in the transverse direction of the seat, and the upper end portion of which is connected to a respective side of the supporting structure (22; 122; 222) of the seat part so as to pivot about an upper axle (19; 119; 219) parallel to the lower axle (17; 117; 217),
c) an arresting device (31; 131; 231), by means of which the rear rockers (18; 118; 218) are arranged to be arrested in selectable pivoted positions corresponding to different seat-length settings.

12. Vehicle seat according to claim 11, characterised in that the arresting device (31; 131; 231) comprises at least one piston-cylinder assembly, the effective length of which is continuously variable and which is arranged to be arrested in any length setting, which assembly is articulated at one end on the rear rocker (18; 118; 218) at a distance from the connection points with the rear foot (2; 1-2; 202) and the supporting structure (22; 122; 222) respectively of the seat part and at the other end, in the region of the front support (25'; 125'; 225), is articulated on an elongate bar (28; 128; 228) pivotally connected to the front support.

13. Vehicle seat according to claim 12, characterised in that, in the region of its rear end, the elongate bar (28; 128; 228) is pivotally connected to the rear foot (2) or is formed in one piece therewith (102; 202).

14. Vehicle seat according to claim 12 or 13, characterised in that the cylinder-piston assembly (31; 131; 231) is biassed for the purpose of enlarging its effective length.

15. Vehicle seat according to any one of claims 11 to 14, characterised in that each of the two front supports consists of a foot (1; 101) and of a front rocker (25; 125) articulated in the region of its lower end on the foot.

16. Vehicle seat according to claim 15, characterised in that at least the one front rocker (25) is arranged to be locked with the front foot supporting it.

17. Vehicle seat according to claim 15 or 16, characterised in that the rear (18) or the front (125) rocker is pivotally connected by means of a respective compensating rocker (20; 120) to the supporting structure (22; 122) of the seat part.

18. Vehicle seat according to claim 17, characterised in that the connecting pin (119) that pivotally connects the front rocker (125) to the compensating rocker (120) engages in a slot (167) provided in the supporting structure (22) of the seat part, which slot extends concentrically with respect to the axle (121) that pins the compensating rocker (120) to the supporting structure (122).

19. Vehicle seat according to any one of claims 15 to 18, characterised in that the front supports (225) are connected to the supporting structure (222) of the seat part by means of a respective pin (224), which is displaceable in a slot (267) provided in the supporting structure (222) along a path that, during a seat-length adjustment, corresponds to the path of the connecting pin (219) that connects the rear rocker (218) to the supporting structure (222) of the seat part.

20. Vehicle seat according to any one of claims 1 to 19, characterised in that the two front seat feet (1; 201), in addition to a downwardly open mouth (3) for receiving a connecting bolt (6) of the floor structure (5) of the vehicle extending in the transverse direction of the seat and a locking device (7, 8, 9) that in its locked position positively blocks escape of the connecting bolt (6) from the mouth (3), comprise a second connecting device (12) arranged offset with respect to the rear seat foot (2; 202), which second connecting device must be connected to the floor structure (5) of the vehicle before the mouth (3) can be placed on the connecting bolt (6) and locked therewith.

21. Vehicle seat according to claim 20, characterised in that the locking device comprises a catch (7) pivotally mounted on the front seat foot (1), which catch in its locking position engages behind the locking bolt (6), and a manually operable lever (8), which is mounted around an axle on the front seat foot (1) parallel to the axis of articulation of the catch (7) and comprises a stop member (9), which, in the locking position of the lever (8) and of the catch (7) blocks these positively against movement into the release position.

## Revendications

1. Siège de véhicule automobile, en particulier siège arrière ou banquette arrière, comportant une ossature de siège qui présente des pieds arrière qui, au moyen d'un dispositif de verrouillage déverrouillable manuellement, peuvent être reliés à la structure de plancher du véhicule, ainsi qu'un dossier qui est relié à l'ossature du siège par l'intermédiaire de ferrures d'articulation qui peuvent se bloquer et qui, à l'état débloqué de leur dispositif de blocage, autorisent à basculer le dossier vers l'avant, le dispositif de verrouillage (16 ; 116, 116', 163) étant couplé avec un mécanisme de sécurité (42, 43 ; 142, 143, 156) qui est associé au dossier et qui
a) ne libère le dispositif de verrouillage (16 ; 116, 116', 163), pour supprimer la liaison entre les pieds (2 ; 102) et la structure de plancher 5, que si le dossier se trouve dans sa position basculée vers l'avant,
b) assure, par complémentarité de forme, le dossier dans la position basculée vers l'avant à l'égard d'un repivotement en position initiale, et
c) ne supprime à nouveau la sécurité du dossier dans la position basculée vers l'avant qu'après que les pieds arrière (2 ; 102) sont reliés à la structure de plancher du véhicule au moyen du dispositif de verrouillage (16 ; 116, 116', 163),
dans lequel le mécanisme de sécurité (42, 43 ; 142, 143, 156) présente un disque d'arrêt (42 ;142) qui est disposé concentriquement à l'axe de pivotement (37 ; 137) du dossier, qui est relié à cette axe sans liberté de rotation relative et qu'un élément d'arrêt (43 ; 143), qui collabore avec lui, maintient, dans toutes les positions de pivotement du dossier, à l'exception de la position de pivotement pour laquelle le dossier a basculé vers l'avant, dans une première position d'arrêt dans laquelle le dispositif de verrouillage (16 ; 116, 116', 163) est assuré à l'égard d'un déverrouillage, et dans la position dans laquelle le dossier a pivoté vers l'avant, autorise un mouvement de l'élément d'arrêt (43 ; 143) par suite d'un déverrouillage du dispositif de verrouillage (16 ; 116, 116', 163),
caractérisé par le fait que l'élément d'arrêt (43 ; 143) se déplace dans une seconde position d'arrêt dans laquelle il assure le disque d'arrêt (42 ; 142) à l'égard d'une rotation dans le sens d'un rebasculement du dossier dans la position d'usage et qu'il ne la quitte à nouveau qu'après verrouillage du dispositif de verrouillage (16 ; 116, 116', 163).

2. Siège de véhicule automobile selon la revendication 1, caractérisé par le fait que le disque d'arrêt est conçu sous forme d'un disque à came (42 ; 142) présentant deux tronçons cylindriques de came, de différentes hauteurs, reliés l'un à l'autre par l'intermédiaire d'un échelon (142'') et que l'élément d'arrêt est conçu sous forme d'un levier pivotant (43 ; 143) qui, dans une première position de pivotement correspondant à la première position d'arrêt, s'appuie contre le tronçon haut de la came et, dans une seconde position de pivotement correspondant à la seconde position d'arrêt, s'appuie contre le tronçon bas de la came (42' ; 142') et forme ici une butée pour l'échelon (142'').

3. Siège de véhicule automobile selon la revendication 2, caractérisé par le fait que le mécanisme de sécurité présente un levier de manoeuvre (156) qui est porté, avec liberté de rotation, sur l'axe (139) du levier pivotant (143) et qui n'est couplé avec le levier de pivotement (143) pour un entraînement obligatoire jusque dans la seconde position de pivotement que dans le sens de pivotement correspondant à un déverrouillage du dispositif de verrouillage (116, 116', 163).

4. Siège de véhicule automobile selon la revendication 2 ou 3, caractérisé par le fait que le dossier peut, aussi bien dans différentes positions d'usage que dans la position basculée vers l'avant, se bloquer au moyen d'un cliquet de crantage (140) qui, au moyen d'un excentrique de serrage (141), relié, sans liberté de rotation relative, à un axe (151) porté dans la ferrure parallèlement à l'axe de pivotement (139) du levier pivotant (143), peut être maintenu en prise avec des crans, et que l'axe (151) est, au moyen du levier pivotant (143, 158), assuré à l'égard d'une rotation lorsque le levier pivotant (143) se trouve dans sa seconde position de pivotement.

5. Siège de véhicule automobile selon la revendication 4, caractérisé par le fait que l'axe (151) présente, dans la zone de pivotement du levier pivotant (143, 158), un tronçon en forme de polygone et que le levier pivotant (143, 158) présente une mâchoire (158) qui est ajustée sur ce tronçon, qui lui est adaptée et qui, dans la seconde position de pivotement, saisit ce tronçon en formant une sécurité antirotation.

6. Siège de véhicule automobile selon la revendication 5, caractérisé par le fait que le levier pivotant (143) présente un bras qui collabore avec le disque à came (142) et un bras muni de la mâchoire (158).

7. Siège de véhicule automobile selon l'une des revendications 3 à 6, caractérisé par le fait qu'aussi bien le levier pivotant (143) que le cliquet d'arrêt (140) et le levier de manoeuvre (156) sont portés, avec liberté de rotation, sur la ferrure d'articulation au moyen d'un unique tourillon (139) disposé parallèlement à l'axe d'articulation (137).

8. Siège de véhicule automobile selon l'une des revendications 3 à 7, caractérisé par le fait qu'au levier de manoeuvre (156) à plage de pivotement limitée, est articulé un levier de libération (160) pour un dispositif de calage modifiable selon la direction longitudinale et que les leviers de libération (160) des deux ferrures d'articulation sont de préférence rigidement réunis l'un à l'autre pour une manoeuvre commune par l'intermédiaire d'une tringle (161) placée parallèlement à l'axe d'articulation (137).

9. Siège de véhicule automobile selon l'une des revendications 1 à 8, caractérisé par le fait que chacun des deux pieds arrière (2 ; 102) présente, comme dispositif de verrouillage, un crochet (116, 116') qui est porté avec liberté de pivotement, qui, à l'état verrouillé, enserre un barreau (115) de la structure de plancher et présente un cliquet de serrage (163) qui est contraint par un ressort, qui est porté avec liberté de rotation qui, dans sa position de pivotement active, maintient le crochet (116, 116') en appui contre le barreau (115) et que, au moyen du levier de manoeuvre (156) du mécanisme de sécurité, on peut faire pivoter à l'encontre de la force du ressort, dans une position de libération dans laquelle le crochet (166, 116'), sous l'action de la force d'un ressort de rappel qui agit sur lui, prend sa position de déverrouillage qui libère le barreau (115).

10. Siège de véhicule automobile selon la revendication 9, caractérisé par le fait que le crochet (116, 116') présente un talon (116') qui, lors du mouvement de pivotement du crochet (116, 116') pour venir dans la position de déverrouillage, appuie, d'en haut, contre le barreau (115) et soulève de ce fait le pied (102).

11. Siège de véhicule automobile selon l'une des revendications 1 à 10, caractérisé par
a) deux supports avant (25 ; 125 ; 225) qui peuvent être reliés, de façon amovible, à la structure de plancher du véhicule et dont le tronçon d'extrémité supérieur est relié avec l'un ou l'autre côté de la structure porteuse (22 ; 122 ; 222) de l'assise avec liberté de pivotement autour d'un axe supérieur (24 ; 119 ; 224) orienté selon la direction transversale du siège,
b) deux biellettes arrière (18 ; 118 ; 218) dont le tronçon d'extrémité inférieur est relié avec l'un ou l'autre pied arrière du siège (2 ; 102 ; 202) avec liberté de pivotement autour d'un axe inférieur (17 ; 117 ; 217) orienté selon la direction transversale du siège et dont le tronçon d'extrémité supérieur est relié à l'un ou à l'autre côté de la structure porteuse (22 ; 122 ; 222) de l'assise avec liberté de pivotement autour d'un axe supérieur (19 ; 119 ; 219) parallèle à l'axe inférieur (17; 117 ; 217),
c) un dispositif de calage (31 ; 131 ; 231) au moyen duquel on peut bloquer les biellettes arrière (18 ; 118 ; 218) dans des positions de pivotement que l'on peut choisir, correspondant à différents réglages du siège selon la direction longitudinale.

12. Siège de véhicule automobile selon la revendication 11, caractérisé par le fait que le dispositif de calage (31 ; 131 ; 231) présente au moins un vérin dont la longueur active peut se modifier de façon continue, qui peut se bloquer dans toute position de réglage en longueur et qui est articulé d'une part à la biellette (18 ; 118 ; 218) à une certaine distance des positions de liaison avec le pied arrière (2 ; 102 ; 202) ou avec la structure porteuse (22 ; 122 ; 222) de l'assise et d'autre part, au voisinage du support avant (25 ; 125 ; 225), à un longeron (28 ; 128 ; 228) relié, avec liberté de pivotement, à ce support.

13. Siège de véhicule automobile selon la revendication 12, caractérisé par le fait que le longeron (28 ; 128 ; 228) est, au voisinage de son extrémité arrière, relié, avec liberté de pivotement, au pied arrière (2) ou est conçu d'une pièce avec ce pied arrière (102 ; 202).

14. Siège de véhicule automobile selon la revendication 12 ou 13, caractérisé par le fait que le vérin (31 ; 131 ; 231) est précontraint dans le sens d'un allongement de sa longueur active.

15. Siège de véhicule automobile selon l'une des revendications 11 à 14, caractérisé par le fait que les deux supports avant sont chacun constitués d'un pied (1 ; 101) et d'une biellette avant (25 ; 125) articulée, au voisinage de son extrémité inférieure, à ce pied.

16. Siège de véhicule automobile selon la revendication 15, caractérisé par le fait qu'au moins l'une des biellettes avant (25) peut se verrouiller avec le pied avant (1) qui la porte.

17. Siège de véhicule automobile selon la revendication 15 ou 16, caractérisé par le fait que la biellette arrière (18) ou la biellette avant (125) est reliée, avec liberté de pivotement, à la structure porteuse (22 ; 122) de l'assise par l'intermédiaire de, pour chacune, une biellette de compensation (20 ; 120).

18. Siège de véhicule automobile selon la revendication 17, caractérisé par le fait que l'axe de liaison (119), qui relie, avec liberté de pivotement, la biellette avant (125) à la biellette de compensation (120), vient en prise dans une fente (167) qui est prévue dans la structure porteuse (22) de l'assise et qui est orientée concentriquement à l'axe (121) qui relie, avec articulation, la biellette de compensation (120) à la structure porteuse (122).

19. Siège de véhicule automobile selon l'une des revendications 15 à 18, caractérisé par le fait que les supports avant (225) sont reliés à la structure porteuse (222) de l'assise par l'intermédiaire de, pour chacun, un ergot (224) qui peut coulisser, dans une fente (267) prévue dans la structure porteuse (222), le long d'un chemin qui, lors d'un réglage du siège selon la direction longitudinale, correspondant au chemin de l'axe de liaison (219) qui relie la biellette arrière (218) à la structure porteuse (222) de l'assise.

20. Siège de véhicule automobile selon l'une des revendications 1 à 19, caractérisé par le fait que les deux pieds avant (1 ; 201) du siège présentent, en plus d'une mâchoire (3), ouverte vers le bas, pour saisir un barreau de liaison (6) de la structure de plancher (5) du véhicule qui s'étend selon la direction transversale du siège, et d'un dispositif de verrouillage (7, 8, 9) qui, dans sa position d'arrêt, interdit, par complémentarité de forme, que le barreau de liaison (6) sorte hors de la mâchoire (3), un second mécanisme de liaison (12) qui est disposé décalé par rapport au pied arrière du siège (2 ; 202) et qui doit être relié à la structure de plancher (5) du véhicule avant que la mâchoire (3) puisse se poser sur le barreau de liaison (6) et se verrouiller avec celui-ci.

21. Siège de véhicule automobile selon la revendication 20, caractérisé par le fait que le dispositif de verrouillage présente un crochet (7) qui est porté, avec liberté de pivotement, sur le pied avant (1) du siège et qui, dans sa position d'arrêt, vient saisir par derrière le barreau de liaison (6), ainsi qu'un levier (8) manoeuvrable manuellement, qui est porté sur le pied avant (1) du siège autour d'un axe parallèle à l'axe de pivotement du crochet (7) et présente une butée (9) qui, dans la position d'arrêt du levier (8) et du crochet (7), bloque, par complémentarité de forme, celui-ci à l'égard d'un déplacement dans la position de libération.
